# EUROPÄISCHE PATENTSCHRIFT

(11) **EP 4 058 334 B1**
(45) Veröffentlichungstag und Bekanntmachung des Hinweises auf die Patenterteilung: **12.07.2023**
(21) Anmeldenummer: 20800635.3
(22) Anmeldetag: 02.11.2020
(51) Int. Cl.: B60T 13/66, B60T 13/68

(54) **ELEKTROPNEUMATISCHES STEUERMODUL**
ELECTRO-PNEUMATIC CONTROL MODULE
MODULE DE COMMANDE ÉLECTROPNEUMATIQUE

(30) Priorität: 14.11.2019 DE 102019130762
(43) Veröffentlichungstag der Anmeldung: 21.09.2022
(73) Patentinhaber: ZF CV Systems Europe BV, 1170 Brüssel (BE)
(72) Erfinder: KLOSTERMANN, Thilo, 30890 Barsinghausen (DE); VAN THIEL, Julian, 30938 Grossburgwedel (DE)
(74) Vertreter: Rabe, Dirk-Heinrich
(86) Internationale Anmeldenummer: PCT/EP2020/080638
(87) Internationale Veröffentlichungsnummer: WO 2021/094116

(56) Entgegenhaltungen:
- WO-A1-2016/169973
- DE-A1-102008 014 547
- DE-A1-102017 006 356

## Beschreibung

Die Erfindung betrifft ein elektropneumatisches Steuermodul für ein elektronisch steuerbares pneumatisches Bremssystem eines Fahrzeugs, insbesondere Nutzfahrzeugs, mit einem pneumatischen Vorratsanschluss, der mit einem Druckluftvorrat zum Empfangen eines Vorratsdrucks verbindbar ist, einer Anhängersteuereinheit, die eine Anhängersteuer-Ventileinheit mit einem oder mehreren elektropneumatischen Ventilen, einen Anhängerbremsdruckanschluss und einen Anhängerversorgungsdruckanschluss aufweist, einer Feststellbremseinheit, die einen Federspeicher-Anschluss für mindestens einen Federspeicher des Fahrzeugs und eine Feststellbrems-Vorsteuereinheit mit einem oder mehreren elektropneumatischen Ventilen aufweist, wobei ein erster Feststellbrems-Vorsteueranschluss der Feststellbrems-Vorsteuereinheit mit einer Entlüftung verbunden ist, und mit einer elektronischen Steuereinheit, wobei die elektronische Steuereinheit dazu eingerichtet ist, die Feststellbremseinheit in Antwort auf den Empfang eines elektronischen Feststellsignals zu veranlassen, die Feststellbrems-Vorsteuereinheit in eine Entlüftungsstellung zu schalten, wobei in der Entlüftungsstellung ein zweiter Feststellbrems-Vorsteueranschluss mit dem ersten Feststellbrems-Vorsteueranschluss druckleitend verbunden ist und der zweite Federspeicher-Anschluss mit einer oder der Entlüftung verbindbar ist.

Bei Bremssystemen für Fahrzeuge, die zum Ziehen eines Anhängers ausgebildet sind, weist das Bremssystem eine Anhängersteuereinheit auf, die auch Trailer Control Valve (TCV) genannt wird und dazu vorgesehen ist, die von dem Fahrzeug vorgegebenen Fahrzeug-Soll-Verzögerungen entsprechend auch über Anschlüsse, nämlich einen Anhängerbremsdruckanschluss und einen Anhängerversorgungsdruckanschluss, pneumatisch auszusteuern. Der Anhängerbremsdruckanschluss wird auch als roter Kupplungskopf bezeichnet, während der Anhängerversorgungsdruckanschluss auch gelber Kupplungskopf genannt wird. Über den Anhängerversorgungsdruckanschluss wird der Anhänger bzw. dessen Bremssystem mit einem Versorgungsdruck aus einem dafür vorgesehenen Vorrat des Zugwagens versorgt, während über den Anhängerbremsdruckanschluss der entsprechende Bremsdruck ausgesteuert wird.

Als ein weiteres Bauteil oder Modul weisen Bremssysteme der vorstehenden Gattung eine Feststellbremseinheit, auch als elektropneumatische Handbremse (EPH) bezeichnet, auf. Solche Feststellbremseinheiten werden üblicherweise mit sogenannten Federspeichern betrieben, also Bremseinrichtungen, die aufgrund einer Federkraft eine oder mehrere Achsen des Fahrzeugs bremsen. Im belüfteten Zustand sind die Bremsen gelöst und im entlüfteten Zustand gebremst. In einem drucklosen Zustand wird das entsprechende Fahrzeug also gebremst. Zur Aktivierung der Feststellbremseinheit ist in der Regel in der Fahrerkabine des Fahrzeugs ein elektrischer Schalter vorgesehen, über den ein entsprechendes Signal an eine elektronische Steuereinheit ausgebbar ist, die dann ein oder mehrere elektropneumatische Ventile so schaltet, dass die Federspeicher entweder ent- oder belüftet werden.

Die Feststellbremseinheit, also die elektropneumatische Handbremse, wird zum Parken des Fahrzeugs bzw. Fahrzeugzugs aber auch als Zusatzbremse in besonderen Situationen verwendet. Das heißt, neben dem normalen Betriebsbremsen werden die Federspeicher wenigstens teilweise entlüftet, um diese zusätzlich oder alternativ zur Bremsung zu verwenden.

Häufig sind Bremszylinder des Fahrzeugs als doppeltwirkende Bremszylinder ausgebildet. Sie haben die Aufgabe, die erforderlichen Bremskräfte sowohl für die Betriebsbremse als auch für die Feststellbremsanlage zu erzeugen und weisen hierfür mehrere mit Druck beaufschlagbare Kammern auf. Die Kraft des doppeltwirkenden Bremszylinders wird dabei in der Regel über eine gemeinsame Betätigungseinheit auf die entsprechende Radbremse übertragen. Bei gleichzeitiger Betätigung der Betriebs- und der Feststell-Bremsanlage kommt es zu einer Bremskraftaddition an der Betätigungseinheit und/oder der Radbremse. Hierdurch kann es zu einer Überbelastung und/oder Beschädigung der Betätigungseinheit und/oder der Radbremse kommen. Ferner droht beim Einsatz übermäßiger Bremskräfte ein Kontrollverlust des Fahrzeugs, beispielsweise aufgrund blockierender Räder. Soll dies verhindert werden, muss ein Überlastschutz-Funktion, die auch als Anti-Compound-Funktion bezeichnet wird, vorgesehen sein.

Um beim Abstellen des Fahrzeugs eine Bewegung des Fahrzeugs mit hoher Sicherheit zu verhindern, ist es zudem wünschenswert, auch den Anhänger zu bremsen. Da die Bremszylinder von Anhängern oftmals keine Federspeicher aufweisen, muss im abgestellten Zustand des Anhängers permanent ein positiver Bremsdruck an den Bremszylindern des Anhängers bereitgestellt werden. Der Anhänger ist in einem drucklosen Zustand beweglich und in einem mit Druck beaufschlagten Zustand gebremst. Das Aufbringen der Bremskraft am Anhänger und am Fahrzeug verhält sich also invers. Um ein entsprechendes Bremssignal auch für den Anhänger pneumatisch auszusteuern, wird in der Regel ein sogenanntes inverses Relaisventil verwendet, welches basierend auf einem sinkenden Druck in den Federspeichern des Fahrzeugs einen steigenden Druck für den Anhänger aussteuert. Solche inversen Relaisventile sind in ihrer Bauart aufwendig und weisen häufig mehrere Steuerkolben auf, die über verschiedene Steuerflächen und verschiedene Steuerkammern miteinander interagieren und mit hohen Kosten verbunden sind. Ferner kann es auch vorgesehen sein, dass, wie in DE 10 2017 006 356 A1 der hiesigen Anmelderin offenbart wird, eine Parkbrems-Ventileinheit mit einem pneumatisch gesteuerten Schaltventil vorgesehen ist, welches einen pneumatischen Steuereingang zum Aufnehmen eines pneumatischen Steuerdrucks aufweist. Beim Verbinden eines Federspeicher-Anschlusses des Fahrzeugs mit einer Drucksenke wird das pneumatisch gesteuerte Schaltventil so geschaltet, dass ein Bremsdruck an dem Anhängerbremsdruckanschluss aussteuerbar ist. Nachteilig hierbei ist, dass zum Realisieren einer Überlastschutz-Funktion weitere pneumatische Anschlüsse und/oder zusätzliche Leitungen vorgesehen werden müssen, welche das System verkomplizieren und einen Anstieg der Kosten bedingen.

DE 10 2017 002 716 A1 offenbart ein elektronisch steuerbares Bremssystem mit einem Anhänger-Steuerventil, das ein Anhänger-Steuermodul aufweist, wobei das Anhänger-Steuermodul dazu ausgebildet ist, eine elektronisch übermittelte Bremsvorgabe aufzunehmen und zu verarbeiten, und das Anhänger-Steuerventil dazu ausgebildet ist, gesteuert von dem Anhänger-Steuermodul einen Redundanz-Steuerdruck in Abhängigkeit der elektronisch übermittelten Bremsvorgabe zu erzeugen und auszugeben, wobei, falls ein durch ein Betriebsbrems-Steuermodul elektrisch gesteuertes Umsetzen der Bremsvorgabe über mindestens einen Betriebsbremskreis durch Aussteuern eines Betriebsbrems-Bremsdruckes verhindert ist, der Betriebsbrems-Bremsdruck in Abhängigkeit des in dem Anhänger-Steuerventil erzeugten Redundanz-Steuerdruckes erzeugt und an die Betriebsbremsen des mindestens einen Betriebsbremskreises ausgesteuert werden kann und/oder ein Anhänger-Steuerdruck in Abhängigkeit des in dem Anhänger-Steuerventil erzeugten Redundanz-Steuerdruckes erzeugt und an einen Anhänger ausgegeben werden kann. Zum Verhindern einer überlagerten Bremsung durch das gleichzeitige Betätigen der Betriebsbremsen und der Federspeicherbremsen wird vorgeschlagen, eine entsprechende Steuerung und Regelung in einem Parkbrems-Steuermodul des elektronisch steuerbaren Bremssystems vorzusehen. Eine kosteneffiziente Umsetzung der Überlastschutz-Funktion wird jedoch nicht offenbart.

Aufgabe der vorliegenden Erfindung ist es, ein elektropneumatisches Steuermodul sowie ein elektronisch steuerbares Bremssystem mit einem solchen Steuermodul anzugeben, welches bei einem vereinfachten Aufbau eine Überlast-Schutzfunktion bereitstellt. Ferner besteht die Aufgabe der Erfindung darin ein Fahrzeug anzugeben, welches ein elektronisch steuerbares Bremssystem mit einem solchen Steuermodul aufweist.

Die Erfindung löst die Aufgabe bei einem elektropneumatischen Steuermodul der eingangs genannten Art dadurch, dass die Feststellbremseinheit druckleitend mit einem Redundanzanschluss verbunden und dazu ausgebildet ist, an Stelle eines Verbindens des Federspeicher-Anschlusses mit der Entlüftung an dem Federspeicher-Anschluss einen ersten Feststellbremsdruck auszusteuern, wenn die Feststellbrems-Vorsteuereinheit in der Entlüftungsstellung ist und ein Redundanzdruck an dem Redundanzanschluss bereitgestellt wird, wobei die Anhängersteuereinheit dazu ausgebildet ist, einen Bremsdruck an dem Anhängerbremsdruckanschluss auszusteuern, wenn ein Redundanzdruck an dem Redundanzanschluss bereitgestellt wird.

In dem elektropneumatischen Steuermodul gemäß einem ersten Aspekt der Erfindung kommt dem Redundanzanschluss also eine Doppelfunktion zu. Einerseits kann mittels des an dem Redundanzanschluss bereitgestellten Redundanzdrucks ein Bremsdruck an dem Anhängerbremsdruckanschluss ausgesteuert werden und andererseits wird eine Überlastschutz-Funktion realisiert. Die Überlast-Schutzfunktion besteht darin, dass bei Vorliegen eines Redundanzdrucks auch dann an dem Federspeicher-Anschluss ein Feststellbremsdruck ausgesteuert wird, wenn die Feststellbrems-Vorsteuereinheit in der Entlüftungsstellung ist. Wird dahingegen kein Redundanzdruck bereitgestellt, wird ein fluidleitend mit dem Federspeicher-Anschluss verbundener Federspeicher entlüftet. Somit kann eine Überlastschutz-Funktion und eine Redundanz-Funktion mit nur einem Anschluss, dem Redundanzanschluss, realisiert und ein Anschluss an dem elektropneumatischen Steuermodul eingespart werden. Hierdurch wird ein Aufbau des elektropneumatischen Steuermoduls erleichtert und dessen Kosten können gesenkt werden.

Das Aussteuern eines Bremsdrucks an dem Anhängerbremsdruckanschluss für den Fall, dass ein Redundanzdruck bereitgestellt wird, ist beispielsweise wünschenswert, wenn ein Benutzer eine Bremsvorgabe tätigen möchte oder wenn ein Fehler im elektrischen System vorliegt. Beispielsweise kann die elektronische Steuereinheit einen Fehler aufweisen oder eine Spannungsversorgung des elektropneumatischen Steuermoduls unterbrochen sein. Vorzugsweise ist das elektropneumatische Steuermodul dazu ausgebildet, einen Bremsdruck am Anhängerbremsdruckanschluss auszusteuern, wenn ein Fehler der elektronischen Steuereinheit, eines oder mehrerer elektropneumatischer Ventile und/oder einer Spannungsversorgung des elektropneumatischen Steuermoduls vorliegt. Hierdurch kann eine Sicherheit eines mit einem erfindungsgemäßen elektropneumatischen Steuermodul ausgestatteten Fahrzeugs erhöht werden.

Die Überlast-Schutzfunktion, auch Anti-Compound-Funktion genannt, stellt sicher, dass eine Betätigungseinheit eines Bremszylinders und/oder eine Radbremse nicht gleichzeitig vollständig durch einen Federspeicher des Bremszylinders, der mit dem Federspeicheranschluss verbunden ist, und einen Betriebsbremszylinder betätigt wird. Vorzugsweise wird ein mit dem Feststellbrems-Vorsteueranschluss verbundener Federspeicher entlüftet, wenn die Feststellbrems-Vorsteuereinheit in einer Entlüftungsstellung ist und kein Redundanzdruck bereitgestellt wird. Hierdurch wird die Kraft des Federspeichers auf die Betätigungseinheit des Bremszylinders und eine damit verbundene Radbremse übertragen. Wenn nun an dem Redundanzanschluss ein Redundanzdruck bereitgestellt wird, dann wird der Feststellbrems-Vorsteueranschluss nicht mit der Entlüftung verbunden, sondern ein Feststellbremsdruck ausgesteuert, welcher der Kraft des Federspeichers zumindest teilweise entgegenwirkt. Vorzugsweise entspricht der erste Feststellbremsdruck dem Redundanzdruck. Es kann jedoch auch vorgesehen sein, dass der Feststellbremsdruck proportional zum Redundanzdruck ist.

In einer ersten bevorzugten Ausführungsform ist die Feststellbremseinheit dazu ausgebildet, den ersten Feststellbremsdruck nur auszusteuern, wenn die Feststellbrems-Vorsteuereinheit in der Entlüftungsstellung ist, und den Vorratsdruck auszusteuern, wenn die Feststellbrems-Vorsteuereinheit in eine Öffnungsstellung geschalten ist. Die Feststellbrems-Vorsteuereinheit kann also zumindest zwischen einer Entlüftungsstellung und einer Öffnungsstellung geschaltet werden. Es soll verstanden werden, dass die Feststellbrems-Vorsteuereinheit auch weitere Schaltstellungen aufweisen kann und/oder, dass ein von der Feststellbrems-Vorsteuereinheit in der Öffnungsstellung ausgesteuerter Druck moduliert werden kann. Vorzugsweise entspricht der Vorratsdruck einem Maximaldruck des Systems. Ferner bevorzugt werden mit dem Federspeicher-Anschluss verbundene Federspeicher vollständig belüftet, wenn der Vorratsdruck ausgesteuert wird.

Vorzugsweise ist der Federspeicher-Anschluss mit der Entlüftung verbunden, wenn kein Redundanzdruck an dem Redundanzanschluss bereitgestellt wird und die Feststellbrems-Vorsteuereinheit in der Entlüftungsstellung ist. Die Feststellbremseinheit weist daher bevorzugt eine Steuerfunktion für am Federspeicher-Anschluss bereitgestellten Druck auf. Ist die Feststellbrems-Vorsteuereinheit in der Entlüftungsstellung wird der Federspeicher-Anschluss entweder mit der Entlüftung verbunden oder es wird ein erster Feststellbremsdruck ausgesteuert. Wird die Feststellbrems-Vorsteuereinheit nun in die Öffnungsstellung geschaltet, wird der Vorratsdruck am Federspeicher-Anschluss ausgesteuert, bevorzugt auch dann, wenn ein Redundanzdruck am Redundanzanschluss bereitgestellt wird. Zum Abstellen des Fahrzeugs wird die Feststellbrems-Vorsteuereinheit in die Entlüftungsstellung geschaltet. Wird in diesem Fall kein Redundanzdruck am Redundanzanschluss bereitgestellt, wird der Federspeicher-Anschluss mit der Entlüftung verbunden und der bzw. die Federspeicher des Fahrzeugs entlüftet, so dass das Fahrzeug gebremst wird. Wenn nun ein Redundanzdruck am Redundanzanschluss bereitgestellt wird, dann wird der erste Bremsdruck am Federspeicher-Anschluss bereitgestellt und die Federspeicherbremse somit zumindest teilweise gelöst.

In einer bevorzugten Ausführungsform weist die Feststellbremseinheit ferner ein Wechselventil mit einem ersten Wechselventilanschluss, einem zweiten Wechselventilanschluss und einem dritten Wechselventilanschluss auf, wobei der erste Wechselventilanschluss zum Empfangen des Redundanzdrucks mit dem Redundanzanschluss verbunden ist, der zweite Wechselventilanschluss zum Empfangen eines Vorsteuerdrucks mit der Feststellbrems-Vorsteuereinheit verbunden ist und wobei das Wechselventil dazu ausgebildet ist, jeweils den höheren des Redundanzdrucks und des Vorsteuerdrucks an dem dritten Wechselventilanschluss bereitzustellen. Das Wechselventil, das auch als Select-High-Ventil bezeichnet wird, erfüllt somit eine Auswahlfunktion zwischen dem Redundanzdruck und dem Vorsteuerdruck, welcher von der Feststellbrems-Vorsteuereinheit bereitgestellt wird. Liegt sowohl am ersten Wechselventilanschluss als auch am zweiten Wechselventilanschluss ein Druck an, wird der jeweils höhere Druck ausgesteuert. Vorzugsweise ist das Wechselventil als Doppelrückschlagventil ausgebildet, wobei ein Durchströmen des Doppelrückschlagventils nur vom ersten Wechselventilanschluss zum dritten Wechselventilanschluss oder vom zweiten Wechselventilanschluss zum dritten Wechselventilanschluss möglich ist. Durch ein Wechselventil kann die zuvor beschriebene Auswahlfunktion in besonders einfacher Weise erreicht werden. Der Vorsteuerdruck wird von der Feststellbrems-Vorsteuereinheit bereitgestellt und kann einem Druckniveau der Entlüftung, dem Vorratsdruck und besonders bevorzugt auch zwischen dem Druckniveau der Entlüftung und dem Vorratsdruck liegenden Drücken entsprechen.

In einer besonders bevorzugten Ausführungsform weist die Feststellbremseinheit ferner ein erstes Relaisventil auf, das einen mit dem dritten Wechselventilanschluss verbundenen Steueranschluss und einen mit dem FederspeicherAnschluss verbundenen Arbeitsanschluss hat. Relaisventile sind im Allgemeinen dazu ausgebildet am Arbeitsanschluss einen Druck bereitzustellen, der proportional zu einem am Steueranschluss bereitgestellten Steuerdruck ist. Dabei wird ein an einem Vorratsanschluss bereitgestellter Druck derart moduliert, dass dieser proportional zu dem Steuerdruck ist. Gemäß dieser Ausführungsform ist ein an dem Arbeitsanschluss ausgesteuerter Druck daher proportional zu dem Redundanzdruck oder zu dem Vorsteuerdruck der Vorsteuereinheit. Entspricht ein am Steueranschluss bereitgestellter Steuerdruck dem Druckniveau der Entlüftung, wird der Arbeitsanschluss des Relaisventils und somit auch der Federspeicher-Anschluss druckleitend mit einem Entlüftungsanschluss des Relaisventils verbunden. Dies kann beispielsweise der Fall sein, wenn die Feststellbrems-Vorsteuereinheit in der Entlüftungsstellung ist und kein Redundanzdruck am Redundanzanschluss bereitgestellt wird.

In einer Variante weist das elektropneumatische Steuermodul ferner eine Parkbremsventileinheit, mit einem ersten pneumatisch gesteuerten Schaltventil auf, welches einen pneumatischen Steueranschluss zum Aufnehmen eines ersten pneumatischen Steuerdrucks aufweist, wobei das erste pneumatisch gesteuerte Schaltventil beim Verbinden des Federspeicher-Anschlusses mit der Entlüftung so geschaltet wird, dass der Vorratsdruck an dem Anhängerbremsdruckanschluss aussteuerbar ist. Ein pneumatisch gesteuertes Schaltventil hat den Vorteil, dass es auch stromlos geschaltet werden kann. Das erste pneumatisch gesteuerte Schaltventil weist vorzugsweise eine erste und eine zweite Schaltstellung auf, wobei das erste pneumatisch gesteuerte Schaltventil in die erste Schaltstellung geschaltet ist, wenn ein erster pneumatischer Steuerdruck an dem ersten pneumatischen Steueranschluss bereitgestellt wird. Das erste pneumatisch gesteuerte Schaltventil ist vorzugsweise, beispielsweise mittels einer Feder, in die zweite Schaltstellung vorgespannt.

Gemäß einer bevorzugten Ausführungsform ist der erste pneumatische Steuerdruck der Druck an dem Federspeicher-Anschluss. Wird der FederspeicherAnschluss mit der Entlüftung verbunden, werden mit dem Federspeicheranschluss verbundene Federspeicher entlüftet und das Fahrzeug gebremst. Gleichzeitig wird das erste pneumatisch gesteuerte Schaltventil in die zweite Schaltstellung geschaltet, sodass ein Bremsdruck an dem Anhängerbremsdruckanschluss ausgesteuert und ein mit dem Fahrzeug verbundener Anhänger gebremst wird. Durch Einsatz des ersten pneumatisch gesteuerten Schaltventils kann somit ein einfacher Aufbau erreicht werden, der es ermöglicht, auf ein inverses Relaisventil zu verzichten. Hierdurch wird eine besonders einfache, kostengünstige und/oder robuste Bauweise erreicht. Hierzu ist auch kein weiteres elektropneumatisches Ventil erforderlich.

Vorzugsweise ist das erste pneumatisch gesteuerte Schaltventil als ein pneumatisch gesteuertes 3/2-Wegeventil mit einem ersten Anschluss, einem zweiten Anschluss und einem dritten Anschluss ausgebildet. 3/2-Wegeventile sind gängige Schaltventile, welche drei Anschlüsse und zwei Schaltstellungen aufweisen. Hier sind in der zweiten Schaltstellung der zweite Anschluss und der dritte Anschluss verbunden und der erste Anschluss geschlossen. In der ersten Schaltstellung sind der erste und dritte Anschluss fluidleitend verbunden und der zweite Anschluss geschlossen.

In einer bevorzugten Ausführungsform ist der erste Anschluss des pneumatischen 3/2-Wegeventils mit dem Redundanzanschluss und der zweite Anschluss des pneumatischen 3/2-Wegeventils mit dem Vorratsanschluss verbunden. Somit ist am dritten Anschluss des 3/2-Wegeventils ein Redundanzdruck aussteuerbar, wenn am pneumatischen Steueranschluss ein erster Steuerdruck bereitgestellt wird. Da der erste Steuerdruck dem Druck am FederspeicherAnschluss entspricht, ist dies der Fall, wenn die Federspeicher eines Fahrzeugs zumindest teilweise belüftet sind. Ist der Federspeicheranschluss mit der Entlüftung verbunden, entspricht der erste pneumatische Steuerdruck dem Druckniveau der Entlüftung, sodass das erste pneumatisch geschaltete Schaltventil in die zweiten Schaltstellung geschaltet ist. In der zweiten Schaltstellung wird dann Vorratsdruck am dritten Anschluss des 3/2-Wegeventils bereitgestellt.

In einer weiteren bevorzugten Ausgestaltung ist der dritte Anschluss des pneumatisch gesteuerten 3/2-Wegeventils mit einem Redundanzventil der Anhängersteuer-Ventileinheit der Anhängersteuereinheit verbunden. Vorzugsweise ist das Redundanzventil der Anhängersteuer-Ventileinheit ein elektronisch steuerbares Schaltventil, insbesondere ein elektronisch steuerbares 2/2-Wegeventil, das in einer stromlosen Schaltstellung geöffnet ist. Beispielsweise kann das Redundanzventil als Magnetventil ausgebildet sein, das mittels einer Feder in die geöffnete Schaltstellung vorgespannt ist. Der an dem Redundanzventil bereitgestellte Druck ist dabei von dem ersten pneumatischen Steuerdruck, der dem Druck am Federspeicheranschluss entspricht, abhängig. Wenn der Federspeicheranschluss mit der Entlüftung verbunden ist, wird an dem Redundanzventil ein Vorratsdruck bereitgestellt. Wenn dahingegen an dem Federspeicheranschluss ein Druck ausgesteuert wird, dann wird an dem Redundanzventil ein Redundanzdruck bereitgestellt. Vorzugsweise ist ein an dem Bremsdruckanschluss bereitgestellter Bremsdruck proportional zu dem am Redundanzventil bereitgestellten Druck. Somit kann in vorteilhafter Weise erreicht werden, dass zum Bremsen eines Anhängers am Bremsdruckanschluss ein Vorratsdruck bereitgestellt wird, wenn der Federspeicheranschluss mit der Entlüftung verbunden und die Federspeicherbremsen eingelegt sind. Wenn am Federspeicher-Anschluss ein Feststellbremsdruck ausgesteuert wird, dann schaltet das pneumatisch gesteuerte 3/2-Wegeventil in die erste Schaltstellung, sodass ein Redundanzdruck am Redundanzventil bereitstellbar ist. Es kann auch vorgesehen sein, dass das Redundanzventil dazu angepasst ist, einen an dem Anhängersteueranschluss bereitgestellten Bremsdruck zu modulieren.

In einer zweiten Variante weist die Anhängersteuer-Ventileinheit der Anhängersteuereinheit ein Redundanzventil auf, wobei der Redundanzanschluss pneumatisch mit einem Redundanzventil-Anschluss verbunden ist. Hier ist der Redundanzanschluss also dauerhaft fluidleitend mit dem Redundanzventil verbunden. Auch gemäß dieser Variante ist das Redundanzventil bevorzugt als elektronisch steuerbares Wegeventil, besonders bevorzugt als 2/2-Wegeventil, ausgebildet, das stromlos offen ist.

Gemäß einer bevorzugten Ausführungsform weist das elektropneumatische Steuermodul ferner eine Parkbremsventileinheit auf, wobei die elektronische Steuereinheit dazu ausgebildet ist, die Parkbremsventileinheit basierend auf einem elektronischen Feststellsignal zu veranlassen, wenigstens ein Ventil der Parkbremsventileinheit so zu schalten, dass eine pneumatische Verbindung des Anhängerversorgungsdruckanschlusses mit dem Vorratsanschluss unterbrochen ist. Dies ist besonders in Bremssystemen für den nordamerikanischen oder den skandinavischen Markt wünschenswert, da Anhänger dort oftmals mit Federspeichern ausgestattet sind, die den Anhänger in einem entlüfteten Zustand bremsen. Ferner sind der Anhängerversorgungsdruckanschluss und der Anhängerbremsdruckanschluss aufgrund gesetzlicher Bestimmungen in den USA offen ausgeführt, sodass ein Entleeren des Druckluftvorrats verhindert werden muss, wenn kein Anhänger angeschlossen ist. Besonders bevorzugt ist die pneumatische Verbindung unterbrochen, wenn die Parkbremsventileinheit stromlos ist. Vorzugsweise ist die Parkbremsventileinheit dazu ausgebildet, den Anhängerversorgungsdruckanschluss mit der oder einer Entlüftung zu verbinden, wenn die pneumatische Verbindung des Anhängerversorgungsdruckanschlusses mit dem Vorratsanschluss unterbrochen ist.

Gemäß einer bevorzugten Ausführungsform weist die Parkbremsventileinheit ein zweites pneumatisch gesteuertes Schaltventil auf, welches einen zweiten pneumatischen Steueranschluss zum Aufnehmen eines zweiten pneumatischen Steuerdrucks aufweist, wobei das zweite pneumatisch gesteuerte Schaltventil beim Unterschreiten eines zweiten Grenzdrucks durch den zweiten Steuerdruck so geschaltet wird, dass die pneumatische Verbindung des Anhängerversorgungsdruckanschlusses mit dem Vorratsanschluss unterbrochen ist. Durch eine pneumatische Steuerung kann ein Schalten des zweiten pneumatischen Schaltventils auch dann sichergestellt werden, wenn die Parkbremsventileinheit stromlos ist. Der zweite Grenzdruck stellt bevorzugt eine Schaltschwelle dar, wobei das zweite pneumatisch gesteuerte Schaltventil bei einem Überschreiten der Schaltschwelle geschaltet wird. Vorzugsweise ist der zweite Steueranschluss mit einem ersten elektronisch steuerbaren Schaltventil der Parkbremsventileinheit verbunden. Das erste elektronisch steuerbare Schaltventil ist bevorzugt als 3/2-Wegeventil ausgebildet, wobei ein erster Anschluss des 3/2-Wegeventils mit dem Steueranschluss verbunden ist. Vorzugsweise ist der erste Anschluss des 3/2-Wegeventils in einer ersten Schaltstellung mittels einer Drossel mit dem Anhängerversorgungsdruckanschluss verbunden. In einer zweiten Schaltstellung ist der erste Anschluss des 3/2-Wegeventils bevorzugt mit der Entlüftung verbunden, sodass das pneumatische Steuermodul eine Verbindung zwischen dem Anhängerversorgungsdruckanschluss und dem Vorratsanschluss unterbricht, wenn das 3/2-Wegeventil in die zweite Schaltstellung geschaltet ist. Vorzugsweise ist das 3/2-Wegeventil mittels einer Feder in dem ersten Schaltzustand vorgespannt. Wenn der Anhängerversorgungsdruckanschluss entlüftet wird, wie dies beispielsweise im Falle des Auftretens einer Leckage in einem Anhängerbremskreis der Fall sein kann, dann reduziert sich der Druck an dem zweiten pneumatischen Steueranschluss des zweiten pneumatisch gesteuerten Schaltventils. Aufgrund der Drossel sinkt der Druck nur langsam, sodass der Anhängerversorgungsdruckanschluss zunächst noch mit dem Vorratsanschluss verbunden ist. Gegebenenfalls kann über den Vorratsanschluss ausreichend Druckluft nachgefördert werden, um den Druckabfall am Anhängerversorgungsdruckanschluss zu kompensieren. Wenn der Druck am Anhängerversorgungsdruckanschluss aufgrund einer Leckage zu stark absinkt, dann unterschreitet der zweite Steuerdruck den Grenzdruck und die Verbindung zwischen dem Vorratsanschluss und dem Anhängerversorgungsdruckanschluss wird unterbrochen.

In einer weiteren bevorzugten Ausführungsform ist das zweite pneumatisch gesteuerte Schaltventil als ein pneumatisch gesteuertes 3/2-Wegeventil mit einem zweiten Anschluss, einem dritten Anschluss und einem vierten Anschluss ausgebildet, wobei der zweite Anschluss mit dem Anhängerversorgungsdruckanschluss verbunden ist, der dritte Anschluss mit dem Vorratsanschluss verbunden ist und der vierte Anschluss mit einer oder der Entlüftung verbunden ist. Das pneumatisch gesteuerte 3/2-Wegeventil weist also bevorzugt zwei Schaltstellungen auf, wobei in einer ersten Schaltstellung der mit dem zweiten Anschluss verbundene Anhängerversorgungsdruckanschluss mit der Entlüftung verbunden ist. Vorzugsweise ist das pneumatisch gesteuerte 3/2-Wegeventil in die zweite Schaltstellung vorgespannt. In einem stromlosen Zustand des zweiten elektropneumatischen Steuermoduls ist das pneumatisch gesteuerte 3/2-Wegeventil daher bevorzugt in die zweite Schaltstellung geschaltet. In der zweiten Schaltstellung ist der mit dem dritten Anschluss verbundene Vorratsanschluss fluidleitend mit dem zweiten Anschluss und somit mit dem Anhängerversorgungsdruckanschluss verbunden.

Vorzugsweise weist die Anhängersteuereinheit ein drittes pneumatisch gesteuertes Schaltventil auf, welches einen dritten pneumatischen Steueranschluss zum Aufnehmen eines dritten pneumatischen Steuerdrucks aufweist, wobei der dritte pneumatische Steueranschluss des dritten pneumatisch gesteuerten Schaltventils mit dem zweiten pneumatischen Steueranschluss des zweiten pneumatischen Schaltventils druckleitend verbunden ist. Durch das Verbinden der Steueranschlüsse des zweiten und dritten Steueranschlusses können das zweite und das dritte pneumatisch gesteuerte Schaltventil mittels eines einzigen Steuerdruckes geschaltet werden.

In einer bevorzugten Ausführungsform ist das dritte pneumatisch gesteuerte Schaltventil dazu ausgebildet, beim Überschreiten eines dritten Grenzdrucks durch den Steuerdruck einen Anhängersteuerdruck an dem Anhängerbremsdruckanschluss bereitzustellen. Vorzugsweise entspricht der dritte Grenzdruck dem zweiten Grenzdruck. Es soll jedoch verstanden werden, dass der dritte Grenzdruck zum Schalten des dritten pneumatisch gesteuerten Schaltventils vom zweiten Grenzdruck verschieden sein kann. Vorzugsweise unterbricht das dritte pneumatisch gesteuerte Schaltventil eine Verbindung der Anhängersteuereinheit mit dem Anhängerbremsdruckanschluss, wenn der dritte Steuerdruck geringer ist, als der dritte Grenzdruck. Vorzugsweise unterschreitet der dritte Steuerdruck den dritten Grenzdruck, wenn ein Druck am Anhängerversorgungsdruckanschluss dem Druckniveau der Entlüftung entspricht. Hierdurch kann vermieden werden, dass ein Bremsdruck am Anhängerbremsdruckanschluss ausgesteuert wird, wenn kein Vorratsdruck am Anhängerversorgungsdruckanschluss bereitgestellt wird. Diese Funktion wird auch als Tractor-Protection-Funktion bezeichnet.

Gemäß einer bevorzugten Ausführungsform sind die elektronische Steuereinheit, die Anhängersteuereinheit und die Feststellbremseinheit in einem Modul integriert. Es kann auch vorgesehen sein, dass einzelnen Komponenten, also die elektronische Steuereinheit, die Anhängersteuereinheit und/oder die Feststellbremseinheit als miteinander verbindbare Sub-Module ausgebildet sind. Durch eine Integration der Komponenten in einem Modul wird insbesondere die Montage wesentlich vereinfacht, wodurch Montagekosten eingespart werden können.

Besonders bevorzugt weist das elektropneumatische Steuermodul ein gemeinsames Gehäuse auf, in dem zumindest die Komponenten der elektronischen Steuereinheit, der Anhängersteuereinheit und der Feststellbremseinheit angeordnet sind. Mittels eines gemeinsamen Gehäuses können Montage- und/oder Herstellungskosten für das elektropneumatische Steuermodul weiter reduziert werden. Ferner kann durch eine modulare Ausführung und/oder ein gemeinsames Gehäuse eine Komplexität eines zugeordneten Bremssystems reduziert werden. Beispielsweise sinkt im Rahmen der Montage das Risiko für ein fehlerhaftes Anschließen des elektropneumatischen Steuermoduls.

Gemäß einem zweiten Aspekt löst die Erfindung die eingangs genannte Aufgabe mit einem elektronisch steuerbaren pneumatischen Bremssystem für ein Fahrzeug, insbesondere Nutzfahrzeug, mit einem Vorderachsbremskreis für eine Vorderachse des Fahrzeugs, der einen Vorderachsmodulator und Vorderachsbetriebsbremszylinder aufweist, einem Hinterachsbremskreis für wenigstens eine Hinterachse des Fahrzeugs, der einen Hinterachsmodulator und Hinterachsbetriebsbremszylinder aufweist, einem Anhängerbremskreis, einer zentralen Steuereinheit, die zum Bereitstellen wenigstens eines Steuersignals an dem Hinterachsmodulator und/oder dem Vorderachsmodulator ausgebildet ist, und einem elektropneumatischen Steuermodul nach einer der vorstehend beschriebenen Ausführungsformen gemäß dem ersten Aspekt. Bezüglich der Merkmale und Ausgestaltungen des elektropneumatischen Steuermoduls wird vollumfänglich auf vorstehende Erläuterungen zum ersten Aspekt der Erfindung Bezug genommen. Der Vorderachsmodulator ist dazu ausgebildet, einen Vorderachsbremsdruck an den Vorderachsbetriebsbremszylindern bereitzustellen. In analoger Weise ist der Hinterachsmodulator dazu ausgebildet, einen Hinterachsbremsdruck an den Hinterachsbetriebsbremszylindern bereitzustellen. Es kann jedoch auch vorgesehen sein, dass zwischen dem Vorderachsmodulator und den Vorderachsbetriebsbremszylindern und/oder dem Hinterachsmodulator und den Hinterachsbetriebsbremszylindern eines oder mehrere ABS-Steuermodule für ein Anti-Blockier-System angeordnet sind. Derartige ABS-Steuermodule sind dem Fachmann aus dem einschlägigen Stand der Technik bekannt. Vorzugsweise weist das elektronisch steuerbare pneumatische Bremssystem einen Bremswertgeber auf. Der Bremswertgeber kann dabei ein elektrisches Bremspedal sein, das zum Bereitstellen einer elektronischen Bremsvorgabe an der zentralen Steuereinheit ausgebildet ist. Ferner kann der Bremswertgeber auch ein pneumatischer Bremswertgeber zum Bereitstellen einer pneumatischen Bremsvorgabe sein.

In einer ersten bevorzugten Ausführungsform des elektronisch steuerbaren pneumatischen Bremssystems ist der Redundanzanschluss des elektropneumatischen Steuermoduls mit dem Vorderachsmodulator, dem Hinterachsmodulator und/oder einem manuell betätigbaren Bremswertgeber pneumatisch verbunden. Hierdurch kann ein Vorderachsbremsdruck, ein Hinterachsbremsdruck und/oder ein manuell vorgegebener Bremsdruck als Redundanzdruck verwendet werden.

Besonders bevorzugt ist der Redundanzdruck ein Vorderachsbremsdruck, der von dem Vorderachsmodulator zum Bremsen von Rädern der Vorderachse bereitgestellt wird. Können die Betriebsbremsen der Hinterachse aufgrund eines Fehlers im Hinterachsbremskreis nicht genutzt werden, erlaubt eine Verwendung des Vorderachsbremsdrucks als Redundanzdruck ein Bremsen von Rädern der Hinterachse mittels der Federspeicherbremsen. Hierdurch kann in vorteilhafter Weise eine Redundanz für den Hinterachsbremskreis erreicht werden.

Es kann auch vorgesehen sein, dass der Redundanzdruck ein Vorderachssteuerdruck ist, der von dem Bremswertgeber am Vorderachsmodulator bereitgestellt wird. Auch hier ist eine Redundanz des Hinterachsbremskreises gegeben, wobei zusätzlich eine Unabhängigkeit des Redundanzdrucks von einer Funktionsfähigkeit des Vorderachsmodulators gegeben ist. Ferner können im Redundanzfall die Räder der Vorderachse unabhängig von den Rädern der Hinterachse gebremst werden.

In einem dritten Aspekt löst die Erfindung die eingangs genannte Aufgabe mit einem Fahrzeug, insbesondere Nutzfahrzeug, mit einem elektronisch steuerbaren pneumatischen Bremssystem gemäß dem zweiten Aspekt der Erfindung. Bezüglich der Ausgestaltungen der Ausführungsformen sowie deren Vorteile wird vollumfänglich auf die obige Beschreibung Bezug genommen.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen.

Der Einfachheit halber sind nachfolgend für identische oder ähnliche Teile oder Teile mit identischer oder ähnlicher Funktion gleiche Bezugszeichen verwendet. Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
Figur 1 eine schematische Darstellung eines Fahrzeugs mit einem elektronisch steuerbaren pneumatischen Bremssystem, das ein elektropneumatisches Steuermodul aufweist;
Figur 2 ein elektropneumatisches Steuermodul gemäß einem ersten Ausführungsbeispiel; und
Figur 3 ein elektropneumatisches Steuermodul gemäß einem zweiten Ausführungsbeispiel.

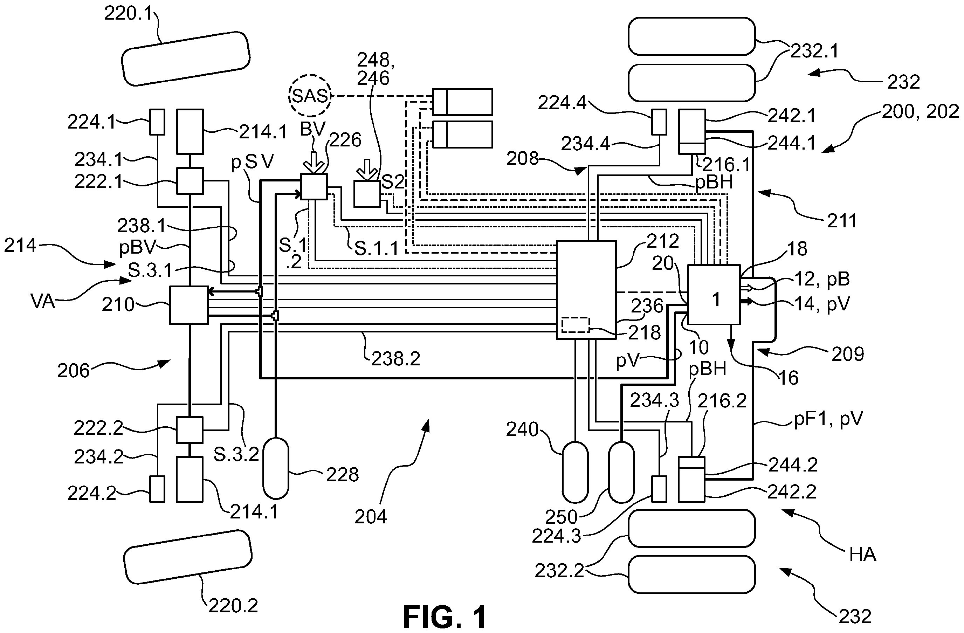

Ein Fahrzeug 200, insbesondere Nutzfahrzeug 202, weist ein elektronisch steuerbares pneumatisches Bremssystem 204 auf (Figur 1). Das elektronisch steuerbare Bremssystem 204 hat hier einen Vorderachsbremskreis 206, einen Hinterachsbremskreis 208 und einen Anhängerbremskreis 209. Der Vorderachsbremskreis 206 weist einen Vorderachsmodulator 210 auf, der zum Aussteuern eines Vorderachsbremsdrucks pBV für Vorderachsbetriebsbremszylinder 214.1, 214.2 ausgebildet ist. Ein erster Vorderachsbetriebsbremszylinder 214.1 ist zum Bremsen eines rechten Vorderrades 220.1 und der zweite Betriebs Bremszylinder 214.2 zum Bremsen eines linken Vorderrades 220.2 einer Vorderachse VA des Fahrzeugs 200 ausgebildet. Ferner weist der Vorderachsbremskreis 206 hier ABS-Module 222.1, 222.2 auf, die dazu ausgebildet sind, den Vorderachsbremsdruck pBV zu modulieren, sodass die Vorderräder 220 individuell gebremst werden können. Zum Ermitteln einer Raddrehzahl der Vorderräder 220 sind ferner Raddrehzahlsensoren 224.1, 224.2 vorgesehen. In diesem Ausführungsbeispiel weist das elektronisch steuerbare pneumatische Bremssystem 204 ferner einen manuell betätigbaren Bremswertgeber 226 auf, wobei der Bremswertgeber 226 dazu ausgebildet ist, einen zu einer Bremsvorgabe BV proportionalen Vorderachssteuerdruck pSV bereitzustellen. Ein erster Druckluftvorrat 228 versorgt sowohl den Vorderachsmodulator 210 als auch den Bremswertgeber 226 mit Druckluft. Hier ist der Bremswertgeber 226 ein teilelektrischer Bremswertgeber der neben dem Vorderachssteuerdruck pSV auch zur Bremsvorgabe BV proportionale Steuersignale S1.1, S1.2 bereitstellt. Der Hinterachsbremskreis 208 ist zum Bremsen von rechten Hinterrädern 232.1 und linken Hinterrädern 232.2 der Hinterachse HA des Fahrzeugs 200 vorgesehen. In diesem Ausführung Beispiel hat das Fahrzeug 200 insgesamt vier Hinterräder 232.1, 232.2, 232.3, 232.4. Es soll verstanden werden, dass das Fahrzeug 200 auch nur zwei Hinterräder 232 aufweisen kann. Ferner kann auch vorgesehen sein, dass das Fahrzeug 200 eine zweite Hinterachse (nicht dargestellt) aufweist, wobei der Hinterachsbremskreis 208 vorzugsweise zum Bremsen der Hinterräder 232 beider Hinterachsen HA ausgebildet ist. Zum Bremsen der Hinterräder 232 weist der Hinterachsbremskreis 208 Hinterachsbetriebsbremszylinder 216.1, 216.2 auf, wobei ein Hinterachsmodulator 212 des Hinterachsbremskreises 208 einen Hinterachsbremsdruck pBH an den Hinterachsbetriebsbremszylindern 216.1, 216.2 bereitstellt. Hier sind die Hinterachsbetriebsbremszylinder 216.1, 216.2 ohne ABS-Module mit dem Hinterachsmodulator 212 verbunden. Es kann jedoch auch vorgesehen sein, dass der Hinterachsbremskreis 208 ABS-Module umfasst. Zum Bestimmen der Drehzahl der Hinterräder 232 sind Raddrehzahlsensoren 224.3, 224.4 vorgesehen. Die Raddrehzahlsensoren 224.1, 224.2, 224.3, 224.4 sind mittels Signalleitungen 234.1, 234.2, 234.3, 234.4 mit einer zentralen Steuereinheit 218 des elektronisch steuerbaren pneumatischen Bremssystems 204 verbunden und stellen Raddrehzahldaten an der zentralen Steuereinheit 218 bereit. Zum Steuern der ABS-Module 222.1, 222.2 ist die zentrale Steuereinheit 218 mittels Steuerleitungen 238.1 238.2 mit den ABS-Modulen 222.1, 222.2 verbunden und stellt ABS-Signale S3.1, S3.2 bereit. Hier sind die Steuereinheit 218 und der Hinterachsmodulator 212 als kombiniertes Modul 236 ausgeführt. Eine Ausführung als kombiniertes Modul 236 ermöglicht eine vereinfachte Montage und Kosteneinsparungen. Es soll verstanden werden, dass die zentrale Steuereinheit 218 und der Hinterachsmodulator 212 auch als getrennte Module ausgeführt sein können. Ein zweiter Druckluftvorrat 240 versorgt den Hinterachsbremskreis 208 mit Druckluft. Hier ist der Hinterachsbremskreis 208 elektronisch steuerbar, wobei der Hinterachsmodulator 212 den Hinterachsbremsdruck pBH basierend auf Hinterachssteuersignalen (nicht dargestellt) der zentralen Steuereinheit 218 aussteuert. Die Hinterachssteuersignale basieren dabei auf dem vom dem Bremswertgeber 226 an der zentralen Steuereinheit 218 bereitgestellten Steuersignal S1.2. Es kann jedoch auch vorgesehen sein, dass das Steuersignal S1.2 des Bremswertgebers 226 direkt an dem Hinterachsmodulator 212 bereitgestellt wird und, dass der Hinterachsmodulator dazu ausgebildet ist, unter Verwendung des Steuersignals S1.2 den Hinterachsbremsdruck pBH auszusteuern.

In diesem Ausführungsbeispiel sind die Hinterachsbetriebsbremszylinder 216.1, 216.2 und Federspeicher 242.1 , 242.2 der Hinterachse HA in doppeltwirkenden Bremszylindern 244.1, 244.2 kombiniert. Die Federspeicher 242.1, 242.2 sind einem Parkbremskreis 211 zugeordnet und mit einem Federspeicher-Anschluss 18 eines elektropneumatischen Steuermoduls 1 verbunden. Zum Lösen der Federspeicher 242.1 , 242.2 steuert das elektropneumatische Steuermodul 1 einen ersten Festellbremsdruck pF1 oder einen Vorratsdruck pV an dem Federspeicher-Anschluss 18 aus und belüftet somit die Federspeicher 242.1, 242.2. Ferner ist das elektropneumatische Steuermodul 1 dazu ausgebildet, die Federspeicher 242.1, 242.2 mittels des Federspeicher-Anschlusses 18 zu entlüften, sodass die Hinterräder 232 mittels der Federspeicher 242.1, 242.2 gebremst werden. Dies erfolgt bevorzugt dann, wenn ein Parkbremsschalter 246 betätigt wird. Es soll verstanden werden, dass der Parkbremsschalter 246 alle Arten von Betätigungseinrichtungen, wie beispielsweise Druckknöpfe oder Hebel umfasst. Hier ist der Parkbremsschalter 246 ein elektronischer Schalter 248 der in Antwort auf ein Betätigen durch einen Benutzer, ein elektronisches Feststellsignal S2 an dem elektropneumatischen Steuermodul 1 bereitstellt.

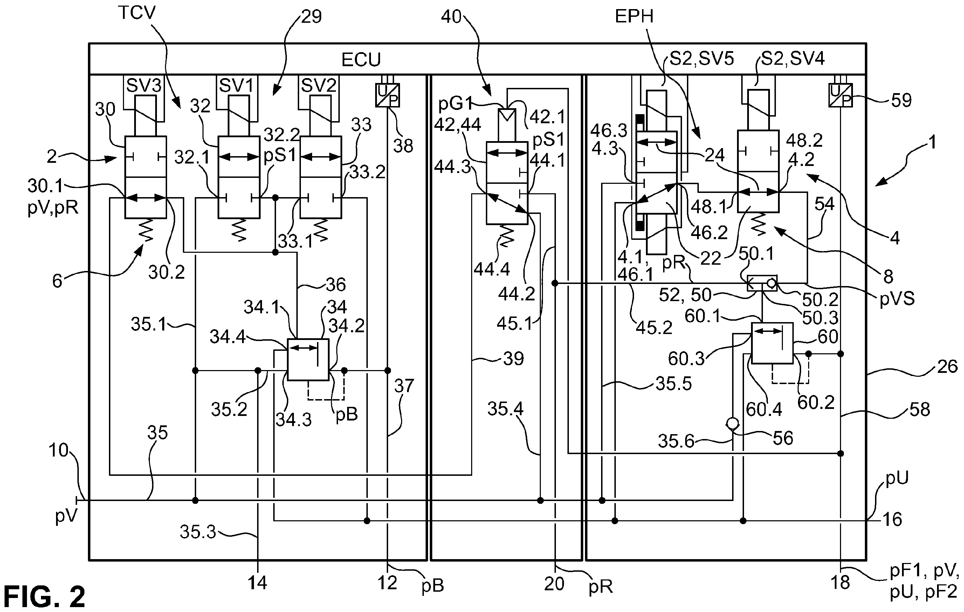

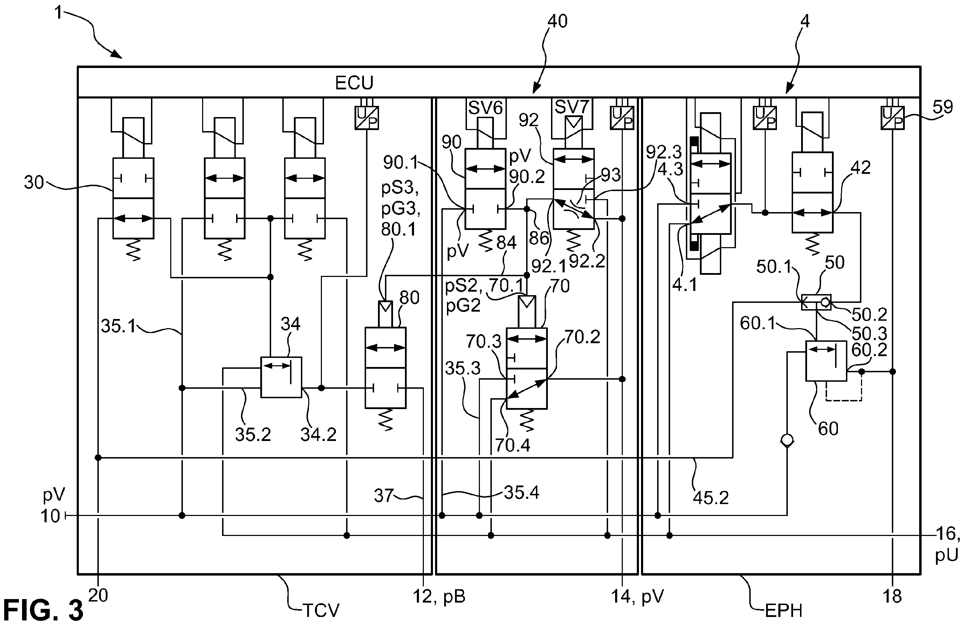

Ferner ist das elektropneumatische Steuermodul 1 auch einem Anhängerbremskreis 209 zugeordnet und dazu ausgebildet, an einem Anhängerbremsdruckanschluss 12 einen Bremsdruck pB und an einem Anhängerversorgungsdruckanschluss 14 einen Vorratsdruck pV auszusteuern. Der Anhängerbremsdruckanschluss 12 und der Anhängerversorgungsdruckanschluss 14 sind zum Anschließen eines Anhängers (nicht dargestellt) vorgesehen. Zum Versorgen mit Vorratsdruck pV ist ein Vorratsanschluss 10 des elektropneumatischen Steuermoduls 1 mit einem dritten Druckluftvorrat 250 druckleitend verbunden. Vorzugsweise ist eine elektronische Steuereinheit ECU (in Figur 1 nicht dargestellt, vgl. Figuren 2, 3) des elektropneumatischen Steuermoduls 1 mit der zentralen Steuereinheit 218 verbunden. Ferner weist das elektropneumatische Steuermodul 1 einen Redundanz-Anschluss 20 auf, der hier mit dem Bremswertgeber 226 druckleitend verbunden ist, wobei der Bremswertgeber 226 den Vorderachssteuerdruck pSV an dem Redundanz-Anschluss 20 bereitstellt. Es kann jedoch auch vorgesehen sein, dass der Redundanz-Anschluss 20 mit dem Hinterachsmodulator 212 druckleitend verbunden ist, wobei der Hinterachsmodulator den Hinterachsbremsdruck pBH an dem Redundanz-Anschluss 20 bereitstellt. Ebenso bevorzugt kann Vorderachsmodulator 10 druckleitend mit dem Redundanz-Anschluss 20 verbunden sein und an diesem den Vorderachsbremsdruck pBV bereitstellen.

Weiterhin weist das elektropneumatische Steuermodul 1 eine Entlüftung 16 auf, die hier zur Umgebung offen ist. Insgesamt weist das elektropneumatische Steuermodul 1 sechs Anschlüsse auf, nämlich den Vorratsanschluss 10, den Anhängerbremsdruckanschluss 12, den Anhängerversorgungsdruckanschluss 14, die Entlüftung 16, den Federspeicher-Anschluss 18 und den RedundanzAnschluss 20. Es kann jedoch auch vorgesehen sein, dass das elektropneumatisches Steuermodul 1 mehrere Federspeicher-Anschlüsse 18 aufweist.

Figur 2 zeigt ein erstes bevorzugtes Ausführungsbeispiel des elektropneumatischen Steuermoduls 1, welches eine Anhängersteuereinheit TCV, eine Feststellbremseinheit EPH und eine Parkbremsventileinheit 40 aufweist. Die Anhängersteuereinheit TCV, die Feststellbremseinheit EPH und die Parkbremsventileinheit 40 sind hier in ein gemeinsames Gehäuse 26 integriert. Die Anhängersteuereinheit TCV, die auch als Trailer-Control-Valve bezeichnet wird, und die Feststellbremseinheit EPH sind hier elektronisch steuerbar ausgebildet und mit der elektronischen Steuereinheit ECU verbunden. Die Parkbremsventileinheit 40 weist ein erstes pneumatisch gesteuertes Schaltventil 42 auf, das mittels eines an einem ersten pneumatischen Steueranschluss 42.1 bereitgestellten ersten Steuerdrucks pS1 gesteuert werden kann.

Der erste pneumatische Steueranschluss 42.1 ist druckleitend mit dem Federspeicher-Anschluss 18 verbunden, sodass der erste Steuerdruck pS1 zu einem am Federspeicher-Anschluss 18 bereitgestellten Druck äquivalent ist. Hier ist das erste pneumatisch gesteuerte Schaltventil 42 als pneumatisch gesteuertes 3/2-Wegeventil 44 ausgebildet, das einen ersten Anschluss 44.1, einen zweiten Anschluss 44.2 und einen dritten Anschluss 44.3 aufweist. Der erste Anschluss 44.1 ist mittels einer ersten Redundanzabzweigung 45.1 druckleitend mit dem Redundanz-Anschluss 20 verbunden, an dem ein Redundanzdruck pR bereitgestellt werden kann. Der zweite Anschluss 44.2 ist druckleitend mit dem Vorratsanschluss 10 verbunden, der Vorratsdruck pV an dem zweiten Anschluss 44.2 bereitstellt. Der dritte Anschluss 44.3 ist druckleitend mit einem Redundanzventil 30 der Anhängersteuereinheit TCV verbunden. Das pneumatisch steuerbare 3/2-Wegeventil 44 ist federbelastet in die in Figur 2 dargestellte erste Schaltstellung vorgespannt. In der ersten Schaltstellung ist der zweite Anschluss 44.2 druckleitend mit dem dritten Anschluss 44.3 verbunden, sodass Vorratsdruck pV an dem Redundanzventil 30 der Anhängersteuereinheit TCV bereitgestellt wird. Wenn der erste Steuerdruck pS1 einen ersten Grenzdruck pG1 überschreitet, dann schaltet das erste pneumatisch steuerbare Schaltventil 42 in eine zweite Schaltstellung und verbindet den Redundanzanschluss 20 druckleitend mit dem Redundanzventil 30. Der erste Grenzdruck pG1 ist größer als ein an der Entlüftung 16 herrschendes Druckniveau, welches hier einem Umgebungsdruck pU entspricht. Wenn der Federspeicher-Anschluss 18 durch eine druckleitende Verbindung mit der Entlüftung 16 entlüftet wird, dann werden Feststellbremsen des Fahrzeugs 200 eingelegt. Zeitgleich unterschreitet der erste Steuerdruck pS1 den ersten Grenzdruck pG1 und das erste pneumatisch steuerbare Schaltventil 42 schaltet in die erste Schaltstellung, sodass über den Vorratsanschluss 10, den zweiten Anschluss 44.2 und den dritten Anschluss 44.3 Vorratsdruck pV an dem Redundanzventil 30 bereitgestellt wird. Wenn hingegen ein Vorratsdruck pV oder ein Feststellbremsdruck pF1, der größer ist als der erste Grenzdruck pG1, an dem Federspeicher-Anschluss 18 bereitgestellt wird, dann werden die Federspeicher 242.1, 242.2 wenigstens teilweise belüftet, sodass sich die Federspeicher 242.1, 242.2 wenigstens teilweise lösen. Zeitgleich wird das pneumatisch gesteuerte Schaltventil 42 in die zweite Schaltstellung geschaltet und der Redundanz-Anschluss 20 über den ersten Anschluss 44.1 und den dritten Anschluss 44.3 des pneumatisch gesteuerten 3/2-Wegeventils 44 mit dem Redundanzventil 30 verbunden.

Ein besonderer Vorteil der beschriebenen Ausführungsform liegt darin, dass für den Fall, dass Federspeicher 242.1, 242.2 durch druckleitendes Verbinden des Federspeicher-Anschlusses 18 mit der Entlüftung 16 zugespannt werden sollen, automatisch Vorratsdruck pV an der Anhängersteuereinheit TCV bereitgestellt wird. Hierfür muss kein kostenintensives und großbauendes inverses Relaisventil vorgesehen werden.

Das Redundanzventil 30 ist hier einer Anhängervorsteuereinheit 29 der Anhängersteuereinheit TCV zugeordnet, die ferner ein Einlassventil 32 und ein Auslassventil 33 umfasst. Zudem weist die Anhängersteuer-Ventileinheit 2 ein zweites Relaisventil 34 auf. Das Einlassventil 32 ist als 2/2-Wegeventil ausgebildet und weist einen ersten Einlassventil-Anschluss 32.1 und einen zweiten Einlassventil-Anschluss 32.2 auf. Der erste Einlassventilanschluss 32.1 ist mittels einer ersten Vorratsabzweigung 35.1 einer ersten Vorratsverteilleitung 35 mit dem Vorratsanschluss 10 verbunden. Der zweite Einlassventil-Anschluss 32.2 ist mit einer ersten Steuerleitung 36 der Anhängersteuereinheit TCV verbunden. Das Einlassventil 32 ist dazu ausgebildet, basierend auf einem ersten Ventilsteuersignal SV1, welches von der elektronischen Steuereinheit ECU bereitgestellt wird, einen am ersten Einlassventil-Anschluss 32.1 bereitgestellten Vorratsdruck pV zu modulieren. Das Einlassventil stellt dann am zweiten EinlassventilAnschluss 32.2 sowie in der ersten Steuerleitung 36 einen ersten Steuerdruck pS1 bereit. Im stromlosen Zustand ist das Einlassventil 32 in einen geschlossenen Zustand vorgespannt.

Ein Steuereingang 34.1 des zweiten Relaisventils 34 ist mit der ersten Steuerleitung 36 verbunden. Das zweite Relaisventil 34 weist ferner einen Arbeitsanschluss 34.2, einen Versorgunganschluss 34.3 und einen Entlüftungsanschluss 34.4 auf. Der Entlüftungsanschluss 34.4 ist hier mit der Entlüftung 16 verbunden. Der Versorgunganschluss 34.3 ist mit einer zweiten Vorratsabzweigung 35.2 der Vorratsdruckverteilleitung 35 verbunden und zum Aufnehmen des am Vorratsanschluss 10 bereitgestellten Vorratsdrucks pV ausgebildet. Ferner verbindet eine dritte Vorratsabzweigung 35.3 der Vorratsdruckverteilleitung 35 den Anhängerversorgungsdruckanschluss 14 unmittelbar mit dem Vorratsanschluss 10 des elektropneumatischen Steuermoduls 1. Wenn das zweite Relaisventil 34 den ersten Steuerdruck pS1 an dem Steueranschluss 34.1 empfängt, dann steuert es am Arbeitsanschluss 34.2 einen zum ersten Steuerdruck pS1 proportionalen Bremsdruck pB aus und stellt diesen über eine Anhängerbremsdruckleitung 37 am Anhängerbremsdruckanschluss 12 bereit. Es soll verstanden werden, dass der Bremsdruck pB auch identisch zum Steuerdruck pS1 ausgebildet sein kann. Ebenso kann auch vorgesehen sein, dass der Bremsdruck pB ein Vielfaches des ersten Steuerdrucks pS1 ist. Hier weist die Anhängersteuereinheit TCV ferner einen mit der elektronischen Steuereinheit ECU verbundene Drucksensor 38 auf, der dazu ausgebildet ist, ein dem Druck in der Anhängerbremsdruckleitung 37 entsprechendes Drucksignal SD an der elektronischen Steuereinheit ECU bereitzustellen.

Ein erster Auslassventilanschluss 33.1 des Auslassventils 33 ist mit der ersten Steuerleitung 36 verbunden. Das Auslassventil 33 ist elektrisch geschaltet und in Antwort auf das Empfangen eines zweiten Ventilsteuersignals SV2, das von der elektronischen Steuereinheit ECU bereitgestellt wird, von einem in Figur 2 gezeigten geschlossenen Schaltzustand in einen geöffneten Schaltzustand schaltbar. Im geöffneten Schaltzustand verbindet das Auslassventil 33 die erste Steuerleitung 36 mit der Entlüftung 16, wobei der erste Auslassventil-Anschluss 33.1 mit einem zweiten Auslassventil-Anschluss 33.2 druckleitend verbunden ist. Vorzugsweise ist das Auslassventil 33 in einem stromlosen Zustand in den in Figur 2 gezeigten Schaltzustand vorgespannt und geschlossen. Wenn das Auslassventil 33 geöffnet wird, sinkt der Druck in der ersten Steuerleitung 36 und am Steueranschluss 34.1 des zweiten Relaisventils 34 auf den Umgebungsdruck pU der Entlüftung 16 ab. Hierdurch wird auch das zweite Relaisventil 34 in eine Entlüftungsstellung geschaltet, sodass die Anhängerbremsdruckleitung 37 und der Anhängerbremsdruckanschluss 12 über den Entlüftungsanschluss 34.4 des zweiten Relaisventils 34 entlüftet werden.

Das zweite Relaisventil 34 wird rein pneumatisch gesteuert. Wenn das Einlassventil 32 und das Auslassventil 33 aufgrund eines Fehlers der elektronische Steuereinheit ECU und/oder eines Fehlers einer Spannungsversorgung (nicht gezeigt) des elektropneumatischen Steuermoduls 1 stromlos geschaltet werden, dann schließen diese automatisch, sodass kein erster Steuerdruck pS1 von dem Einlassventil 32 an der ersten Steuerleitung 36 bereitgestellt wird. Das Redundanzventil 30, das hier ebenfalls elektrisch geschaltet wird, ist in einem in Figur 2 gezeigten stromlosen Zustand geöffnet, so dass ein erster Redundanzventil-Anschluss 30.1 mit einem zweiten Redundanzventil-Anschluss 30.2 druckleitend verbunden ist. Der zweite Redundanzventil-Anschluss 30.2 ist wiederum mit der ersten Steuerleitung 36 verbunden. Wenn die Anhängervorsteuereinheit 29 stromlos ist, sind das Einlassventil 32 und das Auslassventil 33 geschlossen, während das Redundanzventil 30 geöffnet ist. Somit kann ein am ersten Redundanzventil-Anschluss 30.1 bereitgestellter Druck am Steueranschluss 34.1 des zweiten Relaisventils 34 bereitgestellt werden. Es soll verstanden werden, dass das Redundanzventil 30 auch dazu ausgebildet sein kann, einen am ersten Redundanzventil-Anschluss 30.1 bereitgestellten Druck, basierend auf einem entsprechenden dritten Ventilsteuersignal SV3, zu modulieren und einen entsprechend modulierten Druck am zweiten Redundanzventil-Anschluss 30.2 bereitzustellen.

Welcher Druck an dem ersten Redundanzventil-Anschluss 30.1 bereitgestellt wird, wird wie zuvor erläutert, durch die Parkbremsventileinheit 40 bestimmt. Je nach Schaltstellung der Parkbremsventileinheit 40 wird entweder mittels des ersten Anschlusses 44.1 und des dritten Anschlusses 44.3 der Parkbremsventileinheit 40 ein Redundanzdruck pR oder mittels des zweiten Anschlusses 44.2 und des dritten Anschlusses 44.3 ein Vorratsdruck pV am Redundanzventil 30 bereitgestellt. Wenn das Redundanzventil 30 geöffnet ist, dann wird der Redundanzdruck pR auch am Steueranschluss 34.1 des zweiten Relaisventils 34 bereitgestellt. Im stromlosen Fall und bei entsprechender Schaltstellung der Parkbremsventileinheit 40, wird also ein zum Redundanzdruck pR proportionaler, besonders bevorzugt äquivalenter, Bremsdruck pB am Anhängerbremsdruckanschluss 12 bereitgestellt. Die dementsprechende Schaltstellung liegt vor, wenn am Federspeicher-Anschluss 18 ein Druck pF1, pV bereitgestellt wird, der größer ist als der erste Grenzdruck pG1 des ersten pneumatischen Steueranschlusses 42.1 des ersten pneumatisch gesteuerten Schaltventils 42 der Parkbremsventileinheit 40. Das Aussteuern eines zum Redundanzdruck pR proportionalen Bremsdrucks pB am Anhängerbremsdruckanschluss 12 ist also genau dann möglich, wenn die Federspeicher 242.1, 242.2 des Fahrzeugs 200 gelöst sind. Sind die Federspeicher 242.1, 242.2 des Fahrzeugs 200 entlüftet, sodass das Fahrzeug 200 gebremst ist, liegt am Federspeicher-Anschluss 18 und am pneumatischen Steueranschluss 42.1 das Druckniveau der Entlüftung 16 an, welches hier dem Umgebungsdruck pU entspricht. Der erste Grenzdruck pG1 des pneumatisch gesteuerten Schaltventils 42 ist größer als der Umgebungsdruck pU, sodass das Schaltventil 42 in die in Figur 2 gezeigte Schaltstellung geschaltet wird. In der gezeigten Schaltstellung ist der zweite Anschluss 44.2 des pneumatisch gesteuerten 3/2-Wegeventils 44 mit dem dritten Anschluss 44.3 druckleitend verbunden. Somit kann Vorratsdruck pV mittels des Vorratsanschlusses 10, einer vierten Vorratsabzweigung 35.4, der Vorratsverteilleitung 35, dem zweiten und dritten Anschluss 44.2, 44.3 des ersten pneumatisch gesteuerten Schaltventils 42 und einer Redundanzleitung 39 am ersten Redundanzventil-Anschluss 30.1 bereitgestellt werden. Wenn das Redundanzventil 30 geöffnet ist, dann wird der Vorratsdruck pV mittels der ersten Steuerleitung 36 am Steueranschluss 34.1 des zweiten Relaisventils 34 bereitgestellt, welches dann einem zum Vorratsdruck pV proportionalen Bremsdruck pB am Arbeitsanschluss 34.2 und somit auch am Anhängerbremsdruckanschluss 12 bereitstellt. Hierdurch kann in vorteilhafter Weise erreicht werden, dass bei eingelegten Federspeicherbremsen des Fahrzeugs 200, das heißt bei vollständig entlüfteten Federspeichern, ein zum Vorratsdruck pV proportionaler Bremsdruck pB, bevorzugt ein zum Vorratsdruck pV äquivalenter Bremsdruck pB, am Anhängerbremsdruckanschluss 12 bereitgestellt wird. Diese Funktionalität wird dabei ohne ein kostenintensives inverses Relaisventil realisiert. Ferner ist dies auch möglich, wenn das elektropneumatische Steuermodul 1, beispielsweise beim Abstellen des Fahrzeugs 200, stromlos ist. Es soll verstanden werden, dass das Einlassventil 32 und das Auslassventil 33 auch basierend auf entsprechenden ersten und zweiten Ventilsteuersignalen SV1, SV2 geschlossen sein können. Ebenso kann das Redundanzventil 30 auch basierend auf dem von der elektronischen Steuereinheit ECU bereitgestellten dritten Ventilsteuersignal SV3 geöffnet werden. Bevorzugt ist das Redundanzventil 30 im regulären Betrieb jedoch geschlossen, sodass der Bremsdruck pB allein mittels des vom Eingangsventil 32 bereitgestellten ersten Steuerdrucks pS1 aussteuerbar ist.

Der am Federspeicher-Anschluss 18 bereitgestellte Druck pF1, pV, pU wird durch die Feststellbremseinheit EPH bestimmt. Die Feststellbremseinheit EPH weist eine Feststellbrems-Vorsteuereinheit 4 auf, die hier von einem elektropneumatischen Bistabilventil 46 und einem zweiten Feststellbremsventil 48 gebildet wird und zum Bereitstellen eines Vorsteuerdrucks pVS ausgebildet ist. Ein erster Feststellbrems-Vorsteueranschluss 4.1 der Feststellbrems-Vorsteuereinheit 4 ist hier von einem ersten Anschluss 46.1 des Bistabilventils 46 gebildet. Ein dritter Anschluss 46.3 des Bistabilventils 46 bildet einen dritten Feststellbrems-Vorsteueranschluss 4.3. Ein zweiter Anschluss 48.2 des zweiten Feststellbremsventils 48 ist hier ein zweiter Feststellbrems-Vorsteueranschluss 4.2, an dem der Vorsteuerdruck pVS bereitgestellt wird. Ein zweiter Anschluss 46.2 des Bistabilventils 46 ist druckleitend mit einem ersten Anschluss 48.1 des zweiten Feststellbremsventils 48 verbunden. Das zweite Feststellbremsventil 48 ist elektropneumatisch gesteuert und in der in Figur 2 dargestellten geöffneten Schaltstellung vorgespannt. Basierend auf ein viertes Ventilsteuersignal SV4, das von der elektronischen Steuereinheit ECU bereitgestellt wird, kann das zweite Feststellbremsventil 48 geschlossen werden. Der erste Anschluss 46.1 des Bistabilventils 46 und somit auch der erste Feststellbrems-Vorsteueranschluss 4.1 sind mit der Entlüftung 16 verbunden. Der dritte Anschluss 46.3 des Bistabilventils 46 und damit auch der Feststellbrems-Vorsteueranschluss 4.3 sind mittels einer fünften Vorratsabzweigung 35.5 mit dem Vorratsanschluss 10 verbundenen, sodass Vorratsdruck pV an dem dritten Feststellbrems-Vorsteueranschluss 4.3 bereitgestellt werden kann. Das Bistabilventil 46 ist als herkömmliches bistabiles 3/2-Wegeventil mit zwei stabilen Schaltzuständen ausgebildet und kann basierend auf einem fünften Ventilsteuersignal SV5 zwischen den beiden Schaltzuständen geschaltet werden. In Antwort auf den Empfang eines elektronischen Feststellsignals S2, stellt die elektronische Steuereinheit ECU Ventilsteuersignale SV4, SV5 bereit und schaltet die Feststellbrems-Vorsteuereinheit 4. In der in Figur 2 gezeigten Entlüftungsstellung 22 ist der erste Feststellbrems-Vorsteueranschluss 4.1 druckleitend mit dem zweiten Feststellbrems-Vorsteueranschluss 4.2 und somit auch mit der Entlüftung 16 druckleitend verbunden. In der Öffnungsstellung 24 ist das zweite Feststellbremsventil 28 geöffnet und ein zweiter Anschluss 46.2 des Bistabilventils 46 mit dem dritten Anschluss 46.3 druckleitend verbunden. Über die fünfte Vorratsabzweigung 35.5 bereitgestellter Vorratsdruck pV wird somit vom dritten Feststellbrems-Vorsteueranschluss 4.3 am zweiten Feststellbrems-Vorsteueranschluss 4.2 bereitgestellt. Abhängig von der Schaltstellung 22, 24 der Feststellbrems-Vorsteuereinheit 4 wird also am zweiten Feststellbrems-Vorsteueranschluss 4.2 der Vorsteuerdruck pVS ausgesteuert. In der Entlüftungsstellung 22 entspricht der Vorsteuerdruck pVS dem Druck an der Entlüftung 16, der hier dem Umgebungsdruck pU entspricht. In der Öffnungsstellung 24 entspricht der Vorsteuerdruck pVS dem Vorratsdruck pV.

Die Feststellbremseinheit EPH weist ferner ein Wechselventil 50 auf, das hier als Doppelrückschlagventil 52 ausgebildet ist. Ein erster Wechselventilanschluss 50.1 des Wechselventils 50 ist über eine zweite Redundanzabzweigung 45.2 mit dem Redundanzanschluss 20 verbunden. Ferner weist das Wechselventil 50 einen zweiten Wechselventilanschluss 50.2 und einen dritten Wechselventilanschluss 50.3 auf. Eine Vorsteuerleitung 54 verbindet den zweiten Feststellbrems-Vorsteueranschluss 4.2 mit dem zweiten Wechselventilanschluss 50.2. Somit kann am ersten Wechselventilanschluss 50.1 der Redundanzdruck pR und am zweiten Wechselventilanschluss 50.2 der Vorsteuerdruck pVS bereitgestellt werden. Das Wechselventil 50 erfüllt hier eine Auswahlfunktion, die auch als Select-High-Funktion bezeichnet wird, wobei immer der jeweils höhere der an dem ersten und zweiten Wechselventilanschluss 50.1, 50.2 bereitgestellten Drücke am dritten Wechselventilanschluss 50.3 bereitgestellt wird. Der dritte Wechselventilanschluss 50.3 ist mit dem Steueranschluss 60.1 eines ersten Relaisventils 60 der Feststellbremseinheit EPH verbunden. Das erste Relaisventil 60 ist dazu ausgebildet, an einem Arbeitsanschluss 60.2 einen Druck auszusteuern, der zu dem am Steueranschluss 60.1 anliegenden Druck proportional ist. Hierfür moduliert das erste Relaisventil 60 den mittels einer sechsten Vorratsabzweigung 35.6 an einem Versorgungsanschluss 60.3 bereitgestellten Vorratsdruck pV. Wenn der Steueranschluss 60.1 des ersten Relaisventils 60 mit der Entlüftung 16 verbunden ist, dann wird der Arbeitsanschluss 60.2 mittels eines Entlüftungsanschlusses 60.4 entlüftet. Vorzugsweise ist in der sechsten Vorratsabzweigung 35.6 ein Rückschlagventil 56 angeordnet, das ein Rückströmen von Fluid vom Versorgungsanschluss 60.3 zum Vorratsanschluss 10 verhindert. Eine Federspeicherleitung 58 verbindet den Arbeitsanschluss 60.2 des ersten Relaisventils 60 mit dem Federspeicher-Anschluss 18. Für eine entsprechende Druckregelung ist ein zweiter Drucksensor 59 für die Feststellbremseinheit EPH vorgesehen, der mit der Federspeicherleitung 58 verbunden ist und ein entsprechendes zweites Drucksignal SD2 an der Steuereinheit ECU bereitstellt.

Die Feststellbrems-Vorsteuereinheit 4 und das Wechselventil 50 bestimmen, welcher Druck am Arbeitsanschluss 60.2 des ersten Relaisventils 60 und somit auch am Federspeicher-Anschluss 18 bereitgestellt wird. Hierfür ist zunächst entscheidend, ob mittels des Redundanzanschlusses 20 und der zweiten Redundanzdruckverteilleitung 45.2 ein Redundanzdruck pR an dem ersten Wechselventilanschluss 50.1 bereitgestellt wird. Wenn dies nicht der Fall ist, wird der am Federspeicher-Anschluss 18 ausgesteuerte Druck durch die Feststellbrems-Vorsteuereinheit 4 bestimmt. Wenn die Feststellbrems-Vorsteuereinheit 4 in der Entlüftungsstellung 22 ist, dann wird an dem Federspeicher-Anschluss 18 der Umgebungsdruck pU ausgesteuert und mit dem Federspeicher-Anschluss 18 verbundene Federspeicher werden entlüftet. Wenn die Feststellbrems-Vorsteuereinheit 4 in einer Öffnungsstellung 24 ist, dann wird mittels des zweiten Feststellbrems-Vorsteueranschlusses 4.2, der Vorsteuerleitung 54, dem zweiten Wechselventilanschluss 50.2 und dem dritten Wechselventilanschluss 50.3 am Steueranschluss 60.1 des ersten Relaisventils 60 der Vorratsdruck pV bereitgestellt. Das erste Relaisventil 60 steuert dann am Arbeitsanschluss 60.2, und somit am Federspeicher-Anschluss 18, den Vorratsdruck pV oder einen zum Vorratsdruck pV proportionalen zweiten Feststellbremsdruck pF2 aus.

Wenn hingegen an dem Redundanzanschluss 20 ein Redundanzdruck pR bereitgestellt wird, dann liegt dieser aufgrund der direkten Verbindung mittels der zweiten Redundanzdruckverteilleitung 45.2 direkt am ersten Wechselventilanschluss 50.1 an. Wenn sich die Feststellbrems-Vorsteuereinheit 4 in der Entlüftungsstellung befindet, wird am zweiten Wechselventilanschluss 50.2 der Umgebungsdruck pU bereitgestellt. Das Wechselventil 50 stellt den höheren Druck, hier also den Redundanzdruck pR, am dritten Wechselventilanschluss 50.3 und damit auch am Steueranschluss 60.1 des ersten Relaisventils 60 bereit. Das erste Relaisventil 60 stellt dann am Arbeitsanschluss 60.2 und dem damit durch die Federspeicherleitung 58 verbundenen Federspeicher-Anschluss 18 einen ersten Feststellbremsdruck pF1 bereit. Der Feststellbremsdruck pF1 entspricht vorzugsweise dem Redundanzdruck pR. Dadurch werden mit dem Federspeiche-Anschluss 18 verbundene Federspeicher 242.1, 242.2 des Fahrzeugs 200 zumindest teilweise belüftet. Wenn der Redundanzdruck pR auch an Betriebsbremszylindern 216 des Fahrzeugs 200 bereitgestellt wird, kann somit ein zeitgleiches Betätigen einer Betätigungseinheit (nicht dargestellt) und/oder einer Radbremse (nicht dargestellt) durch Federspeicher 242 und Betriebsbremszylinder 216 vermieden und eine Überlast-Schutzfunktion realisiert werden. Wenn hingegen die Feststellbrems-Vorsteuereinheit 4 in einer Öffnungsstellung ist, dann liegt am zweiten Wechselventilanschluss 50.2 der erste Vorsteuerdruck pVS an. Wenn das Bistabilventil 46 und das zweite Feststellbremsventil 48 vollständig geöffnet sind, dann entspricht der erste Vorsteuerdruck pVS dem Vorratsdruck pV. Da der Vorratsdruck pV größer ist als der Redundanzdruck pR, wird dieser vom Wechselventil 50 an dem Steueranschluss 60.1 des ersten Relaisventils 60 bereitgestellt. In der Folge wird am Federspeicher-Anschluss 18 ein zum Vorratsdruck pV proportionaler Druck bereitgestellt. Dieser entspricht bevorzugt dem Vorratsdruck pV.

Vorzugsweise ist das zweite Feststellbremsventil 48 dazu ausgebildet, einen am zweiten Anschluss 46.2 des Bistabilventils 46 bereitgestellten Druck zu modulieren, und am zweiten Anschluss 48.2 des zweiten Feststellbremsventils 48 bereitzustellen. Der Vorsteuerdruck pVS kann also mittels des zweiten Feststellbremsventils 48 moduliert werden. Besonders vorteilhaft ist dies, wenn am ersten Wechselventilanschluss 50.1 kein Redundanzdruck pR bereitgestellt wird. Wie bereits erläutert stellt die Feststellbremseinheit EPH dann einen zum ersten Vorsteuerdruck pVS proportionalen zweiten Feststellbremsdruck pF2 am Federspeicher-Anschluss 18 bereit. Durch Modulation des Drucks pVS können mit dem Federspeicher-Anschluss 18 verbundene Federspeicherbremsen 242.1, 242.2 des Fahrzeugs 200 somit als Redundanzbremsen oder Hilfsbremsen verwendet werden. Es kann jedoch auch vorgesehen sein, dass die Feststellbrems-Vorsteuereinheit 4 ohne zweites Feststellbremsventil 48 ausgeführt ist. Beispielsweise kann der zweite Feststellbrems-Vorsteueranschluss 4.2 dann von dem zweiten Anschluss 46.2 des Bistabilventils 46 gebildet werden.

Gemäß diesem Ausführungsbeispiel werden sowohl die Anhängersteuereinheit TCV als auch die Feststellbremseinheit EPH von dem elektronischen Steuermodul ECU angesteuert. Es kann jedoch auch vorgesehen sein, dass die Anhängersteuereinheit TCV und die Feststellbremseinheit EPH jeweils über eigene elektronische Steuereinheiten verfügen. Dies kann bevorzugt sein, um bei einem Ausfall der jeweils anderen elektronischen Steuereinheit, zumindest die Funktionsfähigkeit eines Subsystems zu gewährleisten. Durch das Verwenden einer gemeinsamen elektronischen Steuereinheit ECU können jedoch bevorzugt Kosten gespart werden.

Hier verfügt das elektropneumatische Steuermodul 1 über jeweils nur einen Vorratsanschluss 10 und einen Redundanzanschluss 20, die in dem elektropneumatischen Steuermodul 1 mittels entsprechender Vorratsabzweigungen 35.1, 35.2, 35.3, 35.4, 35.5, 35.6 und Redundanzabzweigungen 45.1, 45.2 mit den Ventilen verbunden sind. Hierdurch kann ein sehr einfacher Aufbau des elektropneumatischen Steuermoduls 1 realisiert werden. Ferner werden Montagefehler beim Einbau des elektropneumatischen Steuermoduls 1 in ein Bremssystem vermieden. Zudem kann an einem Bremssystem 204, das ein erfindungsgemäßes elektropneumatisches Steuermodul 1 aufweiset, eine vereinfachte und kostengünstige Leitungsverlegung erreicht werden.

Figur 3 verdeutlicht ein zweites Ausführungsbeispiel eines elektropneumatischen Steuermoduls 1. Die Feststellbremseinheit EPH ist im Wesentlichen analog zur Feststellbremseinheit EPH gemäß dem ersten Ausführungsbeispiel ausgeführt, weshalb hier vollumfänglich auf obenstehende Beschreibung zum ersten Ausführungsbeispiel Bezug genommen wird. Zusätzlich zum zweiten Drucksensor 59 verfügt die Feststellbremseinheit EPH gemäß dem zweiten Ausführungsbeispiel noch über einen dritten Drucksensor 62. Es soll verstanden werden, dass auch die Feststellbremseinheit EPH gemäß dem ersten Ausführungsbeispiel (Figur 2) einen dritten Drucksensor 62 aufweisen kann.

Auch die Anhängersteuereinheit TCV gemäß dem zweiten Ausführungsbeispiel ist im Wesentlichen analog zur Anhängersteuereinheit TCV gemäß dem ersten Ausführungsbeispiel ausgeführt. Hier ist der erste Redundanzventilanschluss 30.1 des Redundanzventils 30 jedoch über die erste Redundanzabzweigung 45.1 mit dem Redundanzanschluss 20 verbunden. Die Funktionsweise des Einlassventils 32, des Auslassventils 33 und des zweiten Relaisventils 34 ist dabei im Wesentlichen analog zum ersten Ausführungsbeispiel. Zwischen dem Arbeitsanschluss 34.2 und der Anhängerbremsdruckleitung 37 ist im zweiten Ausführungsbeispiel noch ein drittes pneumatisches Schaltventil 80 vorgesehen, welches dazu ausgebildet ist, einen am Arbeitsanschluss 34.2 des zweiten Relaisventils 34 bereitgestellten Bremsdruck pB nur dann zum Anhängerbremsdruckanschluss 12 durchzusteuern, wenn ein dritter Steuerdruck pS3 einen dritten Grenzdruck pG3 des dritten pneumatischen Schaltventils 80 überschreitet. In einem drucklosen Zustand ist das dritte pneumatische Schaltventil 80 in einem in Figur 3 gezeigten geschlossenen Zustand vorgespannt. Eine dritte Steuerleitung 86 verbindet einen dritten pneumatischen Steueranschluss 80.1 des dritten pneumatischen Schaltventils 80 mit einem zweiten Steueranschluss 70.1 eines zweiten pneumatischen Schaltventils 70, der Parkbremsventileinheit 40. Ein zweiter pneumatischer Steuerdruck pS2 zum Steuern des zweiten pneumatischen Schaltventils 70 und der dritte pneumatische Steuerdruck pS3 sind daher identisch. Wenn der zweite pneumatische Steuerdruck pS2 einen zweiten Grenzdruck pG2 des zweiten pneumatischen Steuerventils 70 überschreitet, dann wird das zweite pneumatische Schaltventil 70 von der in Figur 3 dargestellten ersten Schaltstellung in eine zweite Schaltstellung geschaltet. Vorzugsweise ist das zweite pneumatische Schaltventil 70 in die erste Schaltstellung vorgespannt. Das zweite pneumatische Schaltventil 70 ist zwischen der dritten Vorratsabzweigung 35.3 und dem Anhängerversorgungsanschluss 14 angeordnet. Dabei ist die dritte Vorratsabzweigung 35.3 mit einem dritten Anschluss 70.3 des zweiten pneumatischen Steuerventils 70 verbunden. Ein zweiter Anschluss 70.2 des zweiten pneumatischen Schaltventils 70 ist druckleitend mit dem Anhängerversorgungsanschluss 14 verbunden. Wenn das zweite pneumatische Schaltventil 70 in der zweiten Schaltstellung ist, dann sind der dritte Anschluss 70.3 und der zweite Anschluss 70.2 verbunden und es wird Vorratsdruck pV an dem Anhängerversorgungsanschluss 14 bereitgestellt. In der ersten Schaltstellung des zweit pneumatischen Schaltventils 70 ist der Anhängerversorgungsanschluss 14 hingegen mittels eines vierten Anschlusses 70.4 mit der Entlüftung 16 verbunden.

Zum Bereitstellen des zweiten und dritten Steuerdrucks pS2, pS3 weist die Parkbremsventileinheit 40 ein erstes Parkbremsventil 90 und ein zweites Parkbremsventil 92 auf. Sowohl das erste Parkbremsventil 90 als auch das zweite Parkbremsventil 92 sind hier als elektrisch schaltbare Ventile ausgebildet. Das erste Parkbremsventil 90 ist ein elektrisch schaltbares 2/2-Wegeventil. Die vierte Vorratsabzweigung 35.4 verbindet einen ersten Anschluss 90.1 des ersten Parkbremsventils 92 mit dem Vorratseingang 10. Die elektronische Steuereinheit ECU ist dazu ausgebildet, sechste Ventilsteuersignale SV6 am ersten Parkbremsventil 90 bereitzustellen, wobei das erste Parkbremsventil 90 geöffnet wird und am zweiten Anschluss 90.2 den Vorratsdruck pV2 bereitstellt. Eine zweite Steuerleitung 84 verbindet den zweiten Anschluss 90.2 des ersten Parkbremsventils 90 mit einem ersten Anschluss 92.1 des zweiten Parkbremsventils 92 und der dritten Steuerleitung 86. Ein zweiter Anschluss 92.2 des zweiten Parkbremsventils 92 ist mit dem Anhängerversorgungsanschluss 14 verbunden. Ferner ist ein dritter Anschluss 92.3 des zweiten Parkbremsventils 92 mit der Entlüftung 16 verbunden. Wenn das zweite Parkbremsventil 92 basierend auf siebten Ventilsteuersignalen SV7, die von der elektronischen Steuereinheit ECU bereitgestellten werden, von einem ersten Schaltzustand in einen zweiten Schaltzustand geschaltet wird, dann werden die zweite Steuerleitung 84 und die dritte Steuerleitung 86 mit der Entlüftung 16 verbunden. In Folge dessen sinkt der zweite Steuerdruck pS2 unter den zweiten Grenzdruck pG2 und das zweite pneumatische Steuerventil 70 schaltet in den ersten Schaltzustand, wobei der Anhängerversorgungsanschluss 14 druckleitend mit der Entlüftung 16 verbunden wird. Ferner unterschreitet auch der dritte Steuerdruck pS3 den dritten Grenzdruck pG3, sodass das dritte pneumatische Steuerventil 80 geschlossen wird, wobei kein Bremsdruck pB an dem Anhängerbremsdruckanschluss 12 ausgesteuert wird.

In einem ersten Schaltzustand des zweiten Schaltventils 92 sind der erste Anschluss 92.1 und der zweite Anschluss 92.2 mittels einer Drossel 93 verbunden. Hier ist das zweite Parkbremsventil 92 in den ersten Schaltzustand vorgespannt. Die Drossel 93 erlaubt dabei nur einen vergleichsweise langsamen Druckausgleich zwischen dem ersten Anschluss 92.1 und dem zweiten Anschluss 92.2 des zweiten Parkbremsventils 92. Wenn ein Bremsdruck pB am Anhängerbremsdruckanschluss 12 und ein Vorratsdruck pV am Anhängerversorgungsdruckanschluss 14 bereitgestellt werden soll, wird das erste Parkbremsventil 90 in den zweiten Schaltzustand geschaltet und der Vorratsdruck pV am zweiten Anschluss 90.2 des ersten Parkbremsventils 90 ausgesteuert. Da die Drossel 93 des zweiten Parkbremsventils 92 nur einen langsamen Druckausgleich ermöglicht, steigt der Druck in der zweiten und dritten Steuerleitung 84, 86 an. Sobald der zweite Steuerdruck pS2 den zweiten Grenzdruck pG2 überschreitet, schaltet das zweite pneumatische Schaltventil 70 in den zweiten Schaltzustand und verbindet den Vorratsanschluss 10 druckleitend mit dem Anhängerversorgungsdruckanschluss 14. Da nun sowohl am ersten Anschluss 92.1 als auch am zweiten Anschluss 92.2 des zweiten Parkbremsventils 92 der Vorratsdruck pV bereitgestellt wird, stabilisiert sich der Druck in der zweiten und dritten Steuerleitung 84, 86 auf dem Niveau des Vorratsdrucks pV. Sobald der dritte Steuerdruck pS3 den dritten Grenzdruck pG3 überschreitet, wird das dritte pneumatische Schaltventil 80 geöffnet, sodass mittels des zweiten Relaisventils 34 ein Bremsdruck pB am Anhängerbremsdruckanschluss 12 ausgesteuert werden kann.

Eine wesentliche Funktion der Parkbremsventileinheit 40 gemäß dem zweiten Ausführungsbeispiel besteht darin, im Falle einer Leckage in einem Bremssystem des Anhängers (nicht dargestellt) oder im Fall eines plötzlichen Trennens des Anhängers von dem Anhängerversorgungsdruckanschluss 14, ein Druckniveau im elektropneumatischen Steuermodul 1 und dem elektronisch steuerbaren Bremssystem 204 zu schützen. In einem solchen Fall wird der Anhängerversorgungsdruckanschluss 14 schnell entlüftet. Wenn das zweite pneumatische Schaltventil 70 in einem solchen Fall in der ersten Schaltstellung verbleiben würde, dann würde der mit dem Vorratsanschluss verbundene Druckluftvorrat 250 entleert werden. Dies wird durch die beschriebene Anordnung des ersten Parkbremsventils 90, des zweiten Parkbremsventils 92, des zweiten pneumatischen Schaltventils 70 und des dritten pneumatischen Schaltventils 80 vermieden. Wenn der Anhängerversorgungsanschluss 14 entlüftet wird, dann sinkt der Druck des damit verbundene zweiten Anschlusses 92.2 des zweiten Parkbremsventils 92 auf das Niveau des Umgebungsdrucks pU ab. Da der erste Anschluss 92.1 und der zweite Anschluss 92.2 des zweiten Parkbremsventils 92 mittels der Drossel 93 verbunden sind, sinkt auch der Druck in der zweiten und dritten Steuerleitung 84, 86. Sobald der zweite Steuerdruck pS2 den zweiten Grenzdruck pG2 unterschreitet, wird das zweite pneumatische Schaltventil in die in Figur 3 dargestellte erste Schaltstellung geschaltet und eine druckleitende Verbindung des Anhängerversorgungsdruckanschlusses 14 mit dem Vorratsanschluss 10 unterbrochen. Ferner wird eine druckleitende Verbindung des Arbeitsanschlusses 34.2 des zweiten Relaisventils 34 zum Anhängerbremsdruckanschluss 12 unterbunden, sobald der dritte Steuerdruck pS3 den dritten Grenzdruck pG3 unterschreitet.

### Bezugszeichenliste (Teil der Beschreibung)

- 1: Elektropneumatisches Steuermodul
- 2: Anhängersteuer-Ventileinheit
- 4: Feststellbrems-Vorsteuereinheit
- 4.1: Erster Feststellbrems-Vorsteueranschluss
- 4.2: Zweiter Feststellbrems-Vorsteueranschluss
- 4.3: Dritter Feststellbrems-Vorsteueranschluss
- 6: Elektropneumatische Ventile der Anhängersteuer-Ventileinheit
- 8: Elektropneumatische Ventile der FeststellbremsVorsteuereinheit
- 10: Vorratsanschluss
- 12: Anhängerbremsdruckanschluss
- 14: Anhängerversorgungsdruckanschluss
- 16: Entlüftung
- 18: Federspeicher-Anschluss
- 20: Redundanz-Anschluss
- 22: Entlüftungsstellung
- 24: Öffnungsstellung
- 26: Gehäuse
- 29: Anhängervorsteuereinheit
- 30: Redundanzventil
- 30.1: Erster Redundanzventil-Anschluss
- 30.2: Zweiter Redundanzventil-Anschluss
- 32: Einlassventil
- 32.1: Erster Einlassventil-Anschluss
- 32.2: Zweiter Einlassventil-Anschluss
- 33: Auslassventil
- 33.1: Erster Auslassventil-Anschluss
- 33.2: Zweiter Auslassventil-Anschluss
- 34: Zweites Relaisventil
- 34.1: Steuereingang zweites Relaisventil
- 34.2: Arbeitsanschluss zweites Relaisventil
- 34.3: Versorgungsanschluss zweites Relaisventil
- 34.4: Entlüftungsanschluss zweites Relaisventil
- 35: Vorratsverteilleitung
- 35.1, 35.2, 35.3, 35.4,: Erste bis sechste Vorratsabzweigungen
- 35.5, 35.6 36: Erste Steuerleitung
- 37: Anhängerbremsdruckleitung
- 38: Drucksensor
- 39: Redundanzleitung
- 40: Parkbremsventileinheit
- 42: Erstes pneumatisch gesteuertes Schaltventil
- 42.1: Erster pneumatischer Steueranschluss
- 44: Pneumatisch gesteuertes 3/2-Wegeventil
- 44.1: Erster Anschluss
- 44.2: Zweiter Anschluss
- 44.3: Dritter Anschluss
- 44.4: Feder
- 45.1: Erste Redundanzabzweigung
- 45.2: Zweite Redundanzabzweigung
- 46: Bistabilventil
- 46.1: Erster Anschluss Bistabilventil
- 46.2: Zweiter Anschluss Bistabilventil
- 46.3: Dritter Anschluss Bistabilventil
- 48: Zweites Feststellbremsventil
- 50: Wechselventil
- 50.1: Erster Wechselventilanschluss
- 50.2: Zweiter Wechselventilanschluss
- 50.3: Dritter Wechselventilanschluss
- 52: Doppelrückschlagventil
- 54: Vorsteuerleitung
- 56: Rückschlagventil
- 58: Zweiter Drucksensor
- 60: Erstes Relaisventil
- 60.1: Steueranschluss erstes Relaisventil
- 60.2: Arbeitsanschluss erstes Relaisventil
- 60.3: Versorgungsanschluss erstes Relaisventil
- 60.4: Entlüftungsanschluss erstes Relaisventil
- 62: Dritter Drucksensor
- 70: Zweites pneumatisches Schaltventil
- 70.1: Zweiter pneumatischer Steueranschluss
- 70.2: Zweiter Anschluss zweites pneumatisches Schaltventil
- 70.3: Dritter Anschluss zweites pneumatisches Schaltventil
- 70.4: Vierter Anschluss zweites pneumatisches Schaltventil
- 80: Drittes pneumatisches Schaltventil
- 80.1: Dritter Steueranschluss
- 84: zweite Steuerleitung
- 86: Dritte Steuerleitung
- 90: Erstes Parkbremsventil
- 90.1: Erster Anschluss erstes Parkbremsventil
- 90.2: Zweiter Anschluss erstes Parkbremsventil
- 92: Zweites Parkbremsventil
- 92.1: Erster Anschluss zweites Parkbremsventil
- 92.2: Zweiter Anschluss zweites Parkbremsventil
- 92.3: Dritter Anschluss zweites Parkbremsventil
- 93: Drossel
- 200: Fahrzeug
- 202: Nutzfahrzeug
- 204: Elektronisch steuerbares pneumatisches Bremssystem
- 206: Vorderachsbremskreis
- 208: Hinterachsbremskreis
- 209: Anhängerbremskreis
- 210: Vorderachsmodulator
- 211: Parkbremskreis
- 212: Hinterachsmodulator
- 214: Vorderachsbetriebsbremszylinder
- 214.1: Erster Vorderachsbetriebsbremszylinder
- 214.2: Zweiter Vorderachsbetriebsbremszylinder
- 216.1, 216.2: Hinterachsbetriebsbremszylinder
- 218: Zentrale Steuereinheit
- 220: Vorderräder
- 220.1: rechtes Vorderrad
- 220.2: linkes Vorderrad
- 222.1, 222.2: ABS-Module
- 224.1, 224.2, 224.3,: Raddrehzahlsensoren
- 224.4 226: Bremswertgeber
- 228: erster Druckluftvorrat

- 232: Hinterräder
- 232.1: rechte Hinterräder
- 232.2: linke Hinterräder
- 234.1, 234.2, 234.3,: Signalleitungen
- 234.4 236: Kombiniertes Modul
- 238.1, 238.2: Steuerleitungen
- 240: zweiter Druckluftvorrat
- 242.1, 242.2: Federspeicher
- 244.1, 244.2: Doppeltwirkende Bremszylinder
- 246: Parkbremsschalter
- 248: Elektronischer Schalter
- 250: Dritter Druckluftvorrat
- BV: Bremsvorgabe
- ECU: Elektronische Steuereinheit
- EPH: Feststellbremseinheit
- pB: Bremsdruck
- pBH: Hinterachsbremsdruck
- pBV: Vorderachsbremsdruck
- pF1, pF2: Feststellbremsdrücke
- pG1, pG2, pG3: Grenzdrücke
- pR: Redundanzdruck
- pSV: Vorderachssteuerdruck
- pS1: Erster Steuerdruck
- pU: Umgebungsdruck
- pV: Vorratsdruck
- pVS: Vorsteuerdruck
- SD: Drucksignal
- SD2: Zweites Drucksignal
- SV1, SV2, SV3, SV4,: Erstes bis siebtes Ventilsteuersignal
- SV5, SV6, SV7 S1.1, S1.2: Steuersignale
- S2: Elektronisches Feststellsignal
- S3.1, S3.2: ABS-Signale
- TCV: Anhängersteuereinheit

## Patentansprüche

1. Elektropneumatisches Steuermodul (1) für ein elektronisch steuerbares pneumatisches Bremssystem (204) eines Fahrzeugs (200), insbesondere Nutzfahrzeugs (202), mit:
einem pneumatischen Vorratsanschluss (10), der mit einem Druckluftvorrat (250) zum Empfangen eines Vorratsdrucks (pV) verbindbar ist,
einer Anhängersteuereinheit (TCV), die eine Anhängersteuer-Ventileinheit (2) mit einem oder mehreren elektropneumatischen Ventilen (6), einen Anhängerbremsdruckanschluss (12) und einen
Anhängerversorgungsdruckanschluss (14) aufweist,
einer Feststellbremseinheit (EPH), die einen Federspeicher-Anschluss (18) für mindestens einen Federspeicher (242.1, 242.2) des Fahrzeugs (200) und eine Feststellbrems-Vorsteuereinheit (4) mit einem oder mehreren elektropneumatischen Ventilen (8) aufweist, wobei ein erster Feststellbrems-Vorsteueranschluss (4.1) der Feststellbrems-Vorsteuereinheit (4) mit einer Entlüftung (16) verbunden ist, und
einer elektronischen Steuereinheit (ECU),
**dadurch gekennzeichnet, dass**
die elektronische Steuereinheit (ECU) dazu eingerichtet ist, die Feststellbremseinheit (EPH) in Antwort auf den Empfang eines elektronischen Feststellsignals (S2) zu veranlassen, die Feststellbrems-Vorsteuereinheit (4) in eine Entlüftungsstellung (22) zu schalten, wobei in der Entlüftungsstellung (22) ein zweiter Feststellbrems-Vorsteueranschluss (4.2) mit dem ersten Feststellbrems-Vorsteueranschluss (4.1) druckleitend verbunden ist und der Federspeicher-Anschluss (18) mit einer oder der Entlüftung (16) verbindbar ist, die Feststellbremseinheit (EPH) druckleitend mit einem Redundanzanschluss (20) verbunden und dazu ausgebildet ist, an Stelle eines Verbindens des Federspeicher-Anschlusses (16) mit der Entlüftung (18) an dem FederspeicherAnschluss (16) einen ersten Feststellbremsdruck (pF1) auszusteuern, wenn die Feststellbrems-Vorsteuereinheit (4) in der Entlüftungsstellung (22) ist und ein Redundanzdruck (pR) an dem Redundanzanschluss (20) bereitgestellt wird, und
die Anhängersteuereinheit (TCV) dazu ausgebildet ist, einen Bremsdruck (pB) an dem Anhängerbremsdruckanschluss (12) auszusteuern, wenn ein Redundanzdruck (pR) an dem Redundanzanschluss (20) bereitgestellt wird.

2. Elektropneumatisches Steuermodul (1) nach Anspruch 1, wobei die Feststellbremseinheit (EPH) dazu ausgebildet ist, den ersten Feststellbremsdruck (pF1) nur auszusteuern, wenn die Feststellbrems-Vorsteuereinheit (4) in der Entlüftungsstellung (22) ist, und den Vorratsdruck (pV) auszusteuern, wenn die Feststellbrems-Vorsteuereinheit (4) in eine Öffnungsstellung (24) geschalten ist.

3. Elektropneumatisches Steuermodul (1) nach Anspruch 1 oder 2, wobei der Federspeicher-Anschluss (18) mit der Entlüftung (16) verbunden ist, wenn kein Redundanzdruck (pR) an dem Redundanzanschluss (20) bereitgestellt wird und die Feststellbrems-Vorsteuereinheit (4) in der Entlüftungsstellung (22) ist.

4. Elektropneumatisches Steuermodul (1) nach einem der vorstehenden Ansprüche, wobei die Feststellbremseinheit (EPH) ferner ein Wechselventil (50) mit einem ersten Wechselventilanschluss (50.1), einem zweiten Wechselventilanschluss (50.2) und einem dritten Wechselventilanschluss (50.3) aufweist, wobei der erste Wechselventilanschluss (50.1) zum Empfangen des Redundanzdrucks (pR) mit dem Redundanzanschluss (20) verbunden ist, der zweite Wechselventilanschluss (50.2) zum Empfangen eines Vorsteuerdrucks (pVS) mit der Feststellbrems-Vorsteuereinheit (4) verbunden ist und wobei das Wechselventil (50) dazu ausgebildet ist, jeweils den höheren des Redundanzdrucks (pR) und des Vorsteuerdrucks (pVS) an dem dritten Wechselventilanschluss (50.3) bereitzustellen.

5. Elektropneumatisches Steuermodul (1) nach Anspruch 4, wobei die Feststellbremseinheit (EPH) ferner ein erstes Relaisventil (60) aufweist, das einen mit dem dritten Wechselventilanschluss (50.3) verbundenen Steueranschluss (60.1) und einen mit dem Federspeicher-Anschluss (18) verbundenen Arbeitsanschluss (60.2) hat.

6. Elektropneumatisches Steuermodul (1) nach einem der vorstehenden Ansprüche, ferner aufweisend eine Parkbremsventileinheit (40), mit einem ersten pneumatisch gesteuerten Schaltventil (42), welches einen ersten pneumatischen Steueranschluss (42.1) zum Aufnehmen eines ersten pneumatischen Steuerdrucks (pS1) aufweist, wobei das pneumatisch gesteuerte Schaltventil (42) beim Verbinden des Federspeicher-Anschlusses (18) mit der Entlüftung (16) so geschaltet wird, dass der Vorratsdruck (pV) an dem Anhängerbremsdruckanschluss (12) aussteuerbar ist.

7. Elektropneumatisches Steuermodul (1) nach Anspruch 6, wobei der erste pneumatische Steuerdruck (pS1) der Druck an dem Federspeicher-Anschluss (18) ist.

8. Elektropneumatisches Steuermodul (1) nach Anspruch 6 oder 7, wobei das pneumatisch gesteuerte Schaltventil (45) als ein pneumatisch gesteuertes 3/2-Wegeventil (44) mit einem ersten Anschluss (44.1), einem zweiten Anschluss (44.2) und einem dritten Anschluss (44.3) ausgebildet ist.

9. Elektropneumatisches Steuermodul (1) nach Anspruch 8, wobei der erste Anschluss (44.1) des pneumatisch gesteuerten 3/2-Wegeventils (44) mit dem Redundanzanschluss (20) und der zweite Anschluss (44.2) des pneumatisch gesteuerten 3/2-Wegeventils (44) mit dem Vorratsanschluss (10) verbunden ist.

10. Elektropneumatisches Steuermodul (1) nach Anspruch 9, wobei der dritte Anschluss (44.3) des pneumatisch gesteuerten 3/2-Wegeventils mit einem Redundanzventil (30) der Anhängersteuer-Ventileinheit (2) der Anhängersteuereinheit (TCV) verbunden ist.

11. Elektropneumatisches Steuermodul (1) nach einem der Ansprüche 1 bis 5, wobei die Anhängersteuer-Ventileinheit (2) der Anhängersteuereinheit (TCV) ein Redundanzventil (30) aufweist, wobei der Redundanzanschluss (20) pneumatisch mit einem ersten Redundanzventil-Anschluss (30.1) verbunden ist.

12. Elektropneumatisches Steuermodul (1) nach Anspruch 11, ferner aufweisend eine Parkbremsventileinheit (40), wobei die elektronische Steuereinheit (ECU) dazu ausgebildet ist, die Parkbremsventileinheit (40) basierend auf einem elektronischen Feststellsignal (S2) zu veranlassen, wenigstens ein Ventil (70) der Parkbremsventileinheit (40) so zu schalten, dass eine pneumatische Verbindung des Anhängerversorgungsdruckanschlusses (14) mit dem Vorratsanschluss (10) unterbrochen ist.

13. Elektropneumatisches Steuermodul (1) nach Anspruch 12, wobei die Parkbremsventileinheit (40) ein zweites pneumatisch gesteuertes Schaltventil (70) aufweist, welches einen zweiten pneumatischen Steueranschluss (70.1) zum Aufnehmen eines zweiten pneumatischen Steuerdrucks (pS2) aufweist, wobei das zweite pneumatisch gesteuerte Schaltventil (70) beim Unterschreiten eines zweiten Grenzdrucks (pG2) durch den zweiten Steuerdruck (pS2) so geschaltet wird, dass die pneumatische Verbindung des Anhängerversorgungsdruckanschlusses (14) mit dem Vorratsanschluss (10) unterbrochen ist.

14. Elektropneumatisches Steuermodul (1) nach Anspruch 13, wobei das zweite pneumatisch gesteuerte Schaltventil (70) als ein pneumatisch gesteuertes 3/2-Wegeventil mit einem zweiten Anschluss (70.2), einem dritten Anschluss (70.3) und einem vierten Anschluss (70.4) ausgebildet ist, wobei der zweite Anschluss (70.2) mit dem Anhängerversorgungsdruckanschluss (14) verbunden ist, der dritte Anschluss (70.3) mit dem Vorratsanschluss (10) verbunden und wobei der vierte Anschluss (70.4) mit einer oder der Entlüftung (16) verbunden ist.

15. Elektropneumatisches Steuermodul (1) nach Anspruch 13 oder 14, wobei die Anhängersteuereinheit (TCV) ein drittes pneumatisch gesteuertes Schaltventil (80) aufweist, welches einen dritten pneumatischen Steueranschluss (80.1) zum Aufnehmen eines dritten pneumatischen Steuerdrucks (pS3) aufweist, wobei der dritte pneumatische Steueranschluss (80.1) des dritten pneumatisch gesteuerten Schaltventils (80) mit dem zweiten pneumatischen Steueranschluss (70.1) des zweiten pneumatischen Schaltventils (70) druckleitend verbunden ist.

16. Elektropneumatisches Steuermodul (1) nach Anspruch 15, wobei das dritte pneumatisch gesteuerte Schaltventil (70) dazu ausgebildet ist, beim Überschreiten eines dritten Grenzdrucks (pG3) durch den dritten Steuerdruck (pS3) einen Anhängersteuerdruck (pB) an dem Anhängerbremsdruckanschluss (16) bereitzustellen.

17. Elektropneumatisches Steuermodul (1) nach einem der vorstehenden Ansprüche, wobei die elektronische Steuereinheit (ECU), die Anhängersteuereinheit (TCV) und die Feststellbremseinheit (EPH) in einem Modul integriert sind.

18. Elektropneumatisches Steuermodul (1) nach Anspruch 17, mit einem gemeinsamen Gehäuse (26), in dem zumindest die Komponenten der elektronischen Steuereinheit (ECU), der Anhängersteuereinheit (TCV) und der Feststellbremseinheit (EPH) angeordnet sind.

19. Elektronisch steuerbares pneumatisches Bremssystem (204) für ein Fahrzeug (200), insbesondere Nutzfahrzeug (202), mit
einem Vorderachsbremskreis (206) für eine Vorderachse (VA) des Fahrzeugs (200), der einen Vorderachsmodulator (210) und Vorderachsbetriebsbremszylinder (214) aufweist,
einem Hinterachsbremskreis (208) für wenigstens eine Hinterachse (HA) des Fahrzeugs (200), der einen Hinterachsmodulator (212) und Hinterachsbetriebsbremszylinder (216.1, 216.2) aufweist,
einem Anhängerbremskreis (209),
einer zentralen Steuereinheit (2018), die zum Bereitstellen wenigstens eines Steuersignals (S1.1, S1.2) an dem Hinterachsmodulator (212) und/oder dem Vorderachsmodulator (210) ausgebildet ist, und
einem elektropneumatischen Steuermodul (1) nach einem der vorstehenden Ansprüche 1 bis 18.

20. Elektronisch steuerbares pneumatisches Bremssystem (204) nach Anspruch 19, wobei der Redundanzanschluss (20) des elektropneumatischen Steuermoduls (1) mit dem Vorderachsmodulator (210), dem Hinterachsmodulator (212) und/oder einem manuell betätigbaren Bremswertgeber (226) pneumatisch verbunden ist.

21. Elektronisch steuerbares pneumatisches Bremssystem (204) nach Anspruch 19 oder 20, wobei der Redundanzdruck (pR) ein Vorderachsbremsdruck (pVA) ist, der von dem Vorderachsmodulator (210) zum Bremsen von Vorderrädern (220) der Vorderachse (VA) bereitgestellt wird.

22. Elektronisch steuerbares pneumatisches Bremssystem (204) nach Anspruch 19 oder 20, wobei der Redundanzdruck (pR) ein Vorderachssteuerdruck (pSVA) ist, der von dem Bremswertgeber (226) am Vorderachsmodulator (210) bereitgestellt wird.

23. Fahrzeug (200), insbesondere Nutzfahrzeug (202), mit einem elektronisch steuerbaren pneumatischen Bremssystem (204) nach einem der vorstehenden Ansprüche 19 bis 22.

## Claims

1. Electropneumatic control module (1) for an electronically controllable pneumatic brake system (204) of a vehicle (200), in particular a utility vehicle (202), comprising:
a pneumatic supply port (10) which can be connected to a compressed air supply (250) for receiving a supply pressure (pV),
a trailer control unit (TCV) which has a trailer control valve unit (2) having one or more electropneumatic valves (6), a trailer brake pressure port (12) and a trailer supply pressure port (14),
a parking brake unit (EPH) which has a spring actuator port (18) for at least one spring actuator (242.1, 242.2) of the vehicle (200) and a parking brake pilot control unit (4) having one or more electropneumatic valves (8), a first parking brake pilot control port (4.1) of the parking brake pilot control unit (4) being connected to a vent (16), and
an electronic control unit (ECU),
**characterized in that**
the electronic control unit (ECU) is configured to cause the parking brake unit (EPH) to switch the parking brake pilot control unit (4) into a venting position (22) as a response to receiving an electronic parking signal (S2), a second parking brake pilot control port (4.2) being connected in a pressure-conducting manner to the first parking brake pilot control port (4.1) in the venting position (22), and the spring actuator port (18) being connectable to a vent or the vent (16), the parking brake unit (EPH) being connected in a pressure-conducting manner to a redundancy port (20) and being designed to output a first parking brake pressure (pF1), instead of connecting the spring actuator port (16) to the vent (18), at the spring actuator port (16) if the parking brake pilot control unit (4) is in the venting position (22) and a redundancy pressure (pR) is provided at the redundancy port (20), and
the trailer control unit (TCV) is designed to output a brake pressure (pB) at the trailer brake pressure port (12) if a redundancy pressure (pR) is provided at the redundancy port (20).

2. Electropneumatic control module (1) according to claim 1, wherein the parking brake unit (EPH) is designed to output the first parking brake pressure (pF1) only if the parking brake pilot control unit (4) is in the venting position (22) and to output the supply pressure (pV) if the parking brake pilot control unit (4) is switched into an open position (24).

3. Electropneumatic control module (1) according to either claim 1 or claim 2, wherein the spring actuator port (18) is connected to the vent (16) if no redundancy pressure (pR) is provided at the redundancy port (20) and the parking brake pilot control unit (4) is in the venting position (22).

4. Electropneumatic control module (1) according to any of the preceding claims, wherein the parking brake unit (EPH) further comprises a shuttle valve (50) having a first shuttle valve port (50.1), a second shuttle valve port (50.2) and a third shuttle valve port (50.3), wherein the first shuttle valve port (50.1) is connected to the redundancy port (20) for receiving the redundancy pressure (pR), the second shuttle valve port (50.2) is connected to the parking brake pilot control unit (4) for receiving a pilot control pressure (pVS), and wherein the shuttle valve (50) is designed to provide in each case the higher out of the redundancy pressure (pR) and the pilot control pressure (pVS) at the third shuttle valve port (50.3).

5. Electropneumatic control module (1) according to claim 4, wherein the parking brake unit (EPH) further comprises a first relay valve (60) which has a control port (60.1) connected to the third shuttle valve port (50.3) and a working port (60.2) connected to the spring actuator port (18).

6. Electropneumatic control module (1) according to any of the preceding claims, further comprising a parking brake valve unit (40) having a first pneumatically controlled switching valve (42) which has a first pneumatic control port (42.1) for receiving a first pneumatic control pressure (pS1), wherein, when the spring actuator port (18) is connected to the vent (16), the pneumatically controlled switching valve (42) is switched such that the supply pressure (pV) can be output at the trailer brake pressure port (12).

7. Electropneumatic control module (1) according to claim 6, wherein the first pneumatic control pressure (pS1) is the pressure at the spring actuator port (18).

8. Electropneumatic control module (1) according to either claim 6 or claim 7, wherein the pneumatically controlled switching valve (45) is designed as a pneumatically controlled 3/2-way valve (44) having a first port (44.1), a second port (44.2) and a third port (44.3).

9. Electropneumatic control module (1) according to claim 8, wherein the first port (44.1) of the pneumatically controlled 3/2-way valve (44) is connected to the redundancy port (20), and the second port (44.2) of the pneumatically controlled 3/2-way valve (44) is connected to the supply port (10).

10. Electropneumatic control module (1) according to claim 9, wherein the third port (44.3) of the pneumatically controlled 3/2-way valve is connected to a redundancy valve (30) of the trailer control valve unit (2) of the trailer control unit (TCV).

11. Electropneumatic control module (1) according to any of claims 1 to 5, wherein the trailer control valve unit (2) of the trailer control unit (TCV) has a redundancy valve (30), wherein the redundancy port (20) is pneumatically connected to a first redundancy valve port (30.1).

12. Electropneumatic control module (1) according to claim 11, further comprising a parking brake valve unit (40), wherein the electronic control unit (ECU) is designed to cause the parking brake valve unit (40) to switch at least one valve (70) of the parking brake valve unit (40), on the basis of an electronic parking signal (S2), such that a pneumatic connection of the trailer supply pressure port (14) to the supply port (10) is interrupted.

13. Electropneumatic control module (1) according to claim 12, wherein the parking brake valve unit (40) has a second pneumatically controlled switching valve (70) which has a second pneumatic control port (70.1) for receiving a second pneumatic control pressure (pS2), wherein, when the second control pressure (pS2) falls below a second limit pressure (pG2), the second pneumatically controlled switching valve (70) is switched such that the pneumatic connection of the trailer supply pressure port (14) to the supply port (10) is interrupted.

14. Electropneumatic control module (1) according to claim 13, wherein the second pneumatically controlled switching valve (70) is designed as a pneumatically controlled 3/2-way valve having a second port (70.2), a third port (70.3) and a fourth port (70.4), wherein the second port (70.2) is connected to the trailer supply pressure port (14), the third port (70.3) is connected to the supply port (10), and wherein the fourth port (70.4) is connected to a vent or the vent (16).

15. Electropneumatic control module (1) according to either claim 13 or claim 14, wherein the trailer control unit (TCV) has a third pneumatically controlled switching valve (80) which has a third pneumatic control port (80.1) for receiving a third pneumatic control pressure (pS3), wherein the third pneumatic control port (80.1) of the third pneumatically controlled switching valve (80) is connected in a pressure-conducting manner to the second pneumatic control port (70.1) of the second pneumatic switching valve (70).

16. Electropneumatic control module (1) according to claim 15, wherein the third pneumatically controlled switching valve (70) is designed to provide a trailer control pressure (pB) at the trailer brake pressure port (16) when the third control pressure (pS3) exceeds a third limit pressure (pG3).

17. Electropneumatic control module (1) according to any of the preceding claims, wherein the electronic control unit (ECU), the trailer control unit (TCV) and the parking brake unit (EPH) are integrated in one module.

18. Electropneumatic control module (1) according to claim 17, comprising a common housing (26) in which at least the components of the electronic control unit (ECU), the trailer control unit (TCV) and the parking brake unit (EPH) are arranged.

19. Electronically controllable pneumatic brake system (204) for a vehicle (200), in particular a utility vehicle (202), comprising
a front axle brake circuit (206) for a front axle (VA) of the vehicle (200), said circuit having a front axle modulator (210) and front axle service brake cylinders (214),
a rear axle brake circuit (208) for at least one rear axle (HA) of the vehicle (200), said circuit having a rear axle modulator (212) and rear axle service brake cylinders (216.1, 216.2),
a trailer brake circuit (209),
a central control unit (2018) designed to provide at least one control signal (S1.1, S1.2) to the rear axle modulator (212) and/or the front axle modulator (210), and
an electropneumatic control module (1) according to any of the preceding claims 1 to 18.

20. Electronically controllable pneumatic brake system (204) according to claim 19, wherein the redundancy port (20) of the electropneumatic control module (1) is pneumatically connected to the front axle modulator (210), the rear axle modulator (212) and/or a manually actuatable brake value transmitter (226).

21. Electronically controllable pneumatic brake system (204) according to either claim 19 or claim 20, wherein the redundancy pressure (pR) is a front axle brake pressure (pVA) provided by the front axle modulator (210) for braking front wheels (220) of the front axle (VA).

22. Electronically controllable pneumatic brake system (204) according to either claim 19 or claim 20, wherein the redundancy pressure (pR) is a front axle control pressure (pSVA) provided by the brake value transmitter (226) to the front axle modulator (210).

23. Vehicle (200), in particular a utility vehicle (202), comprising an electronically controllable pneumatic brake system (204) according to any of claims 19 to 22.

## Revendications

1. Module de commande électropneumatique (1) pour un système de freinage pneumatique (204) à commande électronique d'un véhicule (200), en particulier d'un véhicule utilitaire (202), comportant :
un raccord de réserve pneumatique (10) qui peut être relié à un réservoir d'air sous pression (250) destiné à recevoir une pression de réserve (pV),
une unité de commande de remorque (TCV) qui présente une unité de valve de commande de remorque (2) comportant une ou plusieurs valves électropneumatiques (6), un raccord de pression de freinage de remorque (12) et un raccord de pression d'alimentation de remorque (14),
une unité de freinage de stationnement (EPH) qui présente un raccord d'accumulateur à ressort (18) pour au moins un accumulateur à ressort (242.1, 242.2) du véhicule (200) et une unité de commande pilote de freinage de stationnement (4) comportant une ou plusieurs valves électropneumatiques (8), dans lequel un premier raccord de commande pilote de freinage de stationnement (4.1) de l'unité de commande pilote de freinage de stationnement (4) est relié à une ventilation (16), et
une unité de commande électronique (ECU),
**caractérisé en ce que**
l'unité de commande électronique (ECU) est conçue pour amener l'unité de freinage de stationnement (EPH) à commuter l'unité de commande pilote de freinage de stationnement (4) dans une position de ventilation (22) en réponse à la réception d'un signal de stationnement (S2) électronique, dans lequel, dans la position de ventilation (22), un second raccord de commande pilote de freinage de stationnement (4.2) est relié au premier raccord de commande pilote de freinage de stationnement (4.1) de manière à conduire la pression et le raccord d'accumulateur à ressort (18) peut être relié à une ou à la ventilation (16), l'unité de freinage de stationnement (EPH) est reliée à un raccord de redondance (20) de manière à conduire la pression et est conçue pour commander une première pression de freinage de stationnement (pF1) au lieu de relier le raccord d'accumulateur à ressort (16) à la ventilation (18) au niveau du raccord d'accumulateur à ressort (16) lorsque l'unité de commande pilote de freinage de stationnement (4) se trouve dans la position de ventilation (22) et qu'une pression de redondance (pR) est fournie au raccord de redondance (20), et
l'unité de commande de remorque (TCV) est conçue pour commander une pression de freinage (pB) au niveau du raccord de pression de freinage de remorque (12) lorsqu'une pression de redondance (pR) est fournie au raccord de redondance (20).

2. Module de commande électropneumatique (1) selon la revendication 1, dans lequel l'unité de freinage de stationnement (EPH) est conçue pour ne commander que la première pression de freinage de stationnement (pF1) lorsque l'unité de commande pilote de freinage de stationnement (4) se trouve dans la position de ventilation (22), et pour commander la pression de réserve (pV) lorsque l'unité de commande pilote de freinage de stationnement (4) est commutée dans une position d'ouverture (24).

3. Module de commande électropneumatique (1) selon la revendication 1 ou 2, dans lequel le raccord d'accumulateur à ressort (18) est relié à la ventilation (16) lorsqu'aucune pression de redondance (pR) n'est fournie au raccord de redondance (20) et que l'unité de commande pilote de freinage de stationnement (4) se trouve dans la position de ventilation (22).

4. Module de commande électropneumatique (1) selon l'une quelconque des revendications précédentes, dans lequel l'unité de freinage de stationnement (EPH) présente en outre une valve d'inversion (50) comportant un premier raccord de valve d'inversion (50.1), un deuxième raccord de valve d'inversion (50.2) et un troisième raccord de valve d'inversion (50.3), dans lequel le premier raccord de valve d'inversion (50.1) est relié au raccord de redondance (20) pour recevoir la pression de redondance (pR), le deuxième raccord de valve d'inversion (50.2) est relié à l'unité de commande pilote de freinage de stationnement (4) pour recevoir une pression de commande pilote (pVS) et dans lequel la valve d'inversion (50) est conçue pour fournir l'élément le plus élevé parmi la pression de redondance (pR) et la pression de commande pilote (pVS) au troisième raccord de valve d'inversion (50.3).

5. Module de commande électropneumatique (1) selon la revendication 4, dans lequel l'unité de freinage de stationnement (EPH) présente en outre une première valve relais (60) pourvue d'un raccord de commande (60.1) relié au troisième raccord de valve d'inversion (50.3) et d'un raccord de travail (60.2) relié au raccord d'accumulateur à ressort (18).

6. Module de commande électropneumatique (1) selon l'une quelconque des revendications précédentes, présentant en outre une unité de valve de frein de stationnement (40), comportant une première valve de commutation (42) à commande pneumatique qui présente un premier raccord de commande (42.1) pneumatique destiné à recevoir une première pression de commande (pS1) pneumatique, dans lequel la valve de commutation (42) à commande pneumatique est commutée lors de la liaison du raccord d'accumulateur à ressort (18) à la ventilation (16), de sorte que la pression de réserve (pV) peut être commandée au niveau du raccord de pression de freinage de remorque (12).

7. Module de commande électropneumatique (1) selon la revendication 6, dans lequel la première pression de commande (pS1) pneumatique est la pression au niveau du raccord d'accumulateur à ressort (18).

8. Module de commande électropneumatique (1) selon la revendication 6 ou 7, dans lequel la valve de commutation (45) à commande pneumatique est réalisée sous la forme d'une valve à 3/2 voies (44) à commande pneumatique comportant un premier raccord (44.1), un deuxième raccord (44.2) et un troisième raccord (44.3).

9. Module de commande électropneumatique (1) selon la revendication 8, dans lequel le premier raccord (44.1) de la valve à 3/2 voies (44) à commande pneumatique est relié au raccord de redondance (20) et le deuxième raccord (44.2) de la valve à 3/2 voies (44) à commande pneumatique est relié au raccord de réserve (10).

10. Module de commande électropneumatique (1) selon la revendication 9, dans lequel le troisième raccord (44.3) de la valve à 3/2 voies à commande pneumatique est relié à une valve de redondance (30) de l'unité de valve de commande de remorque (2) de l'unité de commande de remorque (TCV).

11. Module de commande électropneumatique (1) selon l'une des revendications 1 à 5, dans lequel l'unité de valve de commande de remorque (2) de l'unité de commande de remorque (TCV) présente une valve de redondance (30), dans lequel le raccord de redondance (20) est relié pneumatiquement au premier raccord de valve de redondance (30.1).

12. Module de commande électropneumatique (1) selon la revendication 11, présentant en outre une unité de valve de frein de stationnement (40), dans lequel l'unité de commande électronique (ECU) est conçue pour amener l'unité de valve de frein de stationnement (40), sur la base d'un signal de stationnement (S2) électronique, à commuter au moins une valve (70) de l'unité de valve de frein de stationnement (40), de sorte que la liaison pneumatique du raccord de pression d'alimentation de remorque (14) au raccord de réserve (10) est interrompue.

13. Module de commande électropneumatique (1) selon la revendication 12, dans lequel l'unité de valve de frein de stationnement (40) présente une deuxième valve de commutation (70) à commande pneumatique présentant un deuxième raccord de commande (70.1) pneumatique destiné à recevoir une deuxième pression de commande (pS2) pneumatique, dans lequel, lorsqu'une deuxième pression de commande (pS2) passe en deçà d'une deuxième pression limite (pG2), la deuxième valve de commutation (70) à commande pneumatique est commutée de sorte que la liaison pneumatique du raccord de pression d'alimentation de remorque (14) au raccord de réserve (10) est interrompue.

14. Module de commande électropneumatique (1) selon la revendication 13, dans lequel la deuxième valve de commutation (70) à commande pneumatique est réalisée sous la forme d'une valve à 3/2 voies à commande pneumatique comportant un deuxième raccord (70.2), un troisième raccord (70.3) et un quatrième raccord (70.4), dans lequel le deuxième raccord (70.2) est relié au raccord de pression d'alimentation de remorque (14), le troisième raccord (70.3) est relié au raccord de réserve (10), et le quatrième raccord (70.4) est relié à une ou à la ventilation (16).

15. Module de commande électropneumatique (1) selon la revendication 13 ou 14, dans lequel l'unité de commande de remorque (TCV) présente une troisième valve de commutation (80) à commande pneumatique présentant un troisième raccord de commande (80.1) pneumatique destiné à recevoir une troisième pression de commande (pS3) pneumatique, dans lequel le troisième raccord de commande (80.1) pneumatique de la troisième valve de commutation (80) à commande pneumatique est relié au deuxième raccord de commande (70.1) pneumatique de la deuxième valve de commutation (70) pneumatique de manière à conduire la pression.

16. Module de commande électropneumatique (1) selon la revendication 15, dans lequel la troisième valve de commutation (70) à commande pneumatique est conçue pour fournir une pression de commande de remorque (pB) au raccord de pression de freinage de remorque (16) lorsque la troisième pression de commande (pS3) passe en deçà d'une troisième pression limite (pG3).

17. Module de commande électropneumatique (1) selon l'une quelconque des revendications précédentes, dans lequel l'unité de commande électronique (ECU), l'unité de commande de remorque (TCV) et l'unité de freinage de stationnement (EPH) sont intégrées dans un module.

18. Module de commande électropneumatique (1) selon la revendication 17, comportant un boîtier commun (26) dans lequel sont disposés au moins les composants de l'unité de commande électronique (ECU), l'unité de commande de remorque (TCV) et l'unité de freinage de stationnement (EPH).

19. Système de freinage pneumatique (204) à commande électronique d'un véhicule (200), en particulier d'un véhicule utilitaire (202), comportant
un circuit de freinage d'essieu avant (206) pour un essieu avant (VA) du véhicule (200) qui présente un modulateur d'essieu avant (210) et un cylindre de frein de service d'essieu avant (214),
un circuit de freinage d'essieu arrière (208) pour au moins un essieu arrière (HA) du véhicule (200) qui présente un modulateur d'essieu arrière (212) et un cylindre de frein de service d'essieu arrière (216.1, 216.2),
un circuit de frein de remorque (209),
une unité de commande centrale (2018) conçue pour la fourniture d'au moins un signal de commande (S1.1, S1.2) au modulateur d'essieu arrière (212) et/ou au modulateur d'essieu avant (210), et
un module de commande électropneumatique (1) selon l'une des revendications 1 à 18 précédentes.

20. Système de freinage pneumatique (204) à commande électronique selon la revendication 19, dans lequel le raccord de redondance (20) du module de commande électropneumatique (1) est relié pneumatiquement au modulateur d'essieu avant (210), au modulateur d'essieu arrière (212) et/ou à un générateur de valeur de freinage (226) à actionnement manuel.

21. Système de freinage pneumatique (204) à commande électronique selon la revendication 19 ou 20, dans lequel la pression de redondance (pR) est une pression de freinage d'essieu avant (pVA) qui est fournie par le modulateur d'essieu avant (210) pour le freinage des roues avant (220) de l'essieu avant (VA).

22. Système de freinage pneumatique (204) à commande électronique selon la revendication 19 ou 20, dans lequel la pression de redondance (pR) est une pression de commande d'essieu avant (pVA) qui est fournie par le générateur de valeur de freinage (226) au modulateur d'essieu avant (210).

23. Véhicule (200), en particulier véhicule utilitaire (202), comportant un système de freinage pneumatique (204) à commande électronique selon l'une des revendications 19 à 22.
